(19) **Europäisches Patentamt / European Patent Office / Office européen des brevets**

(11) **EP 2 054 736 B1**

(12) **EUROPÄISCHE PATENTSCHRIFT**

(45) Veröffentlichungstag und Bekanntmachung des Hinweises auf die Patenterteilung:
**30.06.2010 Patentblatt 2010/26**

(21) Anmeldenummer: **07802117.7**

(22) Anmeldetag: **04.09.2007**

(51) Int Cl.:
**G01S 5/02** *(2010.01)*

(86) Internationale Anmeldenummer:
**PCT/EP2007/007705**

(87) Internationale Veröffentlichungsnummer:
**WO 2008/034518 (27.03.2008 Gazette 2008/13)**

(54) **KONZEPT ZUM LOKALISIEREN EINER POSITION AUF EINEM WEG**

CONCEPT FOR LOCATING A POSITION ON A TRAVEL PATH

CONCEPT DE LOCALISATION D'UNE POSITION SUR UN PARCOURS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **20.09.2006 DE 102006044231**
**27.12.2006 DE 102006061650**

(43) Veröffentlichungstag der Anmeldung:
**06.05.2009 Patentblatt 2009/19**

(73) Patentinhaber: **Fraunhofer-Gesellschaft zur Förderung der angewandten Forschung e.V.**
**80686 München (DE)**

(72) Erfinder:
- **MEYER, Steffen**
  **91052 Erlangen (DE)**
- **HUPP, Jürgen**
  **90425 Nürnberg (DE)**
- **LOIDL, Karin**
  **89250 Senden (DE)**

(74) Vertreter: **Schenk, Markus**
**Schoppe, Zimmermann, Stöckeler & Zinkler Patentanwälte**
**Postfach 246**
**82043 Pullach bei München (DE)**

(56) Entgegenhaltungen:
EP-A- 1 109 031    DE-A1-102004 035 531
US-A- 6 104 344    US-A1- 2005 113 111
US-A1- 2005 197 139

- **CONNELLY K ET AL: "A Toolkit for Automatically Constructing Outdoor Radio Maps" INFORMATION TECHNOLOGY: CODING AND COMPUTING, 2005. ITCC 2005. INTERNATIONAL CONFERENCE ON LAS VEGAS, NV, USA 04-06 APRIL 2005, PISCATAWAY, NJ, USA,IEEE, 4. April 2005 (2005-04-04), Seiten 248-253, XP010795323 ISBN: 0-7695-2315-3**
- **XIAOYONG CHAI ET AL: "Reducing the Calibration Effort for Location Estimation Using Unlabeled Samples" PERVASIVE COMPUTING AND COMMUNICATIONS, 2005. PERCOM 2005. THIRD IEEE INTERNATIONAL CONFERENCE ON KAUAI ISLAND, HI, USA 08-12 MARCH 2005, PISCATAWAY, NJ, USA,IEEE, 8. März 2005 (2005-03-08), Seiten 95-104, XP010779644 ISBN: 0-7695-2299-8**
- **OCANA M ET AL: "Indoor Robot Navigation using a POMDP based on WiFi and Ultrasound observations" INTELLIGENT ROBOTS AND SYSTEMS, 2005. (IROS 2005). 2005 IEEE/RSJ INTERNATIONAL CONFERENCE ON EDMONTON, AB, CANADA 02-06 AUG. 2005, PISCATAWAY, NJ, USA,IEEE, 2. August 2005 (2005-08-02), Seiten 503-508, XP010857127 ISBN: 0-7803-8912-3**

## Beschreibung

Die vorliegende Erfindung bezieht sich auf ein Konzept zum Lokalisieren einer Position auf einem Weg, wobei entlang des Weges Funksignale von fest positionierten Funksendern empfangbar sind, wie es insbesondere zum Lokalisieren oder Navigieren von mobilen Endgeräten in einem drahtlosen Kommunikationsnetz eingesetzt werden kann.

Für ein Auffinden von Personen mit mobilen Endgeräten stehen verschiedene Ortungstechnologien zur Verfügung. Das wohl bekannteste System zur Lokalisierung bzw. Navigation im Outdoorbereich ist das satellitengestützte Global Positioning System (GPS). Für die Lokalisierung bzw. Navigation innerhalb von Gebäuden bzw. einem Indoorbereich sind verschiedene Ansätze bekannt, wie beispielsweise Infrarotsysteme, RFID-Systeme oder auch Feldstärkeauswertungen von IEEE 802.11 WLAN-Netzwerken (WLAN = Wireless Local Area Network). Das GPS-System ist momentan nur für den Outdoorbereich zuverlässig verfügbar. Neuere Erweiterungen, wie hochsensible Empfänger oder das so genannte A-GPS (Assisted GPS) stellen Versuche dar, die Technologie auch innerhalb von Gebäuden nutzbar zu machen. A-GPS kombiniert dabei die Nutzung des satellitenbasierten GPS-Systems mit einem Empfang so genannter Assistenzinformationen aus zellularen Mobilfunknetzen. Zur Zeit weisen diese Technologien aber noch nicht die gewünschten mittleren Genauigkeiten auf. Infrarotsystem und RFID-Systeme stehen im Allgemeinen nicht flächendeckend zur Verfügung und sind an spezifische Voraussetzungen gebunden.

Auf Grund der zunehmenden Verbreitung von drahtlosen Funknetzen, die beispielsweise auf dem WLAN-Standard basieren, bieten sich diese drahtlosen Netze als eine Basis für neue Lokalisierungsverfahren an.

Gängige, bisher verwendete Lokalisierungsverfahren basieren beispielsweise auf Triangulation, Nachbarschaftsbeziehungen, Lateration mittels Zeitmessung oder Lateration mittels Feldstärkeauswertung. Bei diesen Verfahren handelt es sich um Lokalisationsverfahren, bei denen entweder eine Position ortsfester Sender bzw. Basisstationen bekannt sein muss, oder bei denen vorher an typischen Positionen in einer von dem Lokalisierungsverfahren abzudeckenden Umgebung trainiert werden muss.

Eine Führung eines Nutzers mit einem mobilen Gerät zu einem Ziel wird im Allgemeinen durch eine Bestimmung der Position des mobilen Gerätes und der Zielposition erreicht. Aus der Relation dieser beiden Informationen kann dann ein zu durchschreitender bzw. zu durchfahrender Weg berechnet werden.

Befinden sich beispielsweise Personen mit mobilen Endgeräten oder aber auch autonome Systeme, wie beispielsweise selbst fahrende Fahrzeuge oder Roboter, in einer fremden Umgebung und möchten ohne komplizierte Wegerklärung andere Personen, definierte Orte oder Dinge finden bzw. dorthin geführt werden oder beispielsweise zurück zu einem Ausgangspunkt geleitet werden und sind die jeweiligen aktuellen Positionen der Personen und Dinge sowie eine Karte der Umgebung nicht bekannt bzw. verfügbar, so versagen die im Vorhergehenden angesprochenen herkömmlichen Lokalisations- bzw. Navigationsverfahren.

Die US-Veröffentlichungsschrift US 2005/0113111 A1 offenbart ein Konzept, mit dem ein Nutzer eines mobilen Endgeräts entlang eines Pfades geführt werden kann, indem er elektromagnetische Strahlung von Sendern entlang des Pfades empfängt. Davor steht eine Trainingsphase, in der die Charakteristika des Radiofeldes entlang des Pfades aufgezeichnet werden. Während der Führungsphase werden dann momentan gemessene Charakteristika mit vorher aufgezeichneten elektromagnetischen Charakteristika (sogenannten Radiofingerabdrücken) verglichen.

Die europäische Patentanmeldung EP 1 109 031 A1 beschreibt ein Lokalisierungsverfahren für eine aktuelle Position in einem vordefinierten, begrenzten Überwachungsbereich. Dabei werden an Referenzpositionen zunächst Referenzverbindungsqualitäten eingemessen. Bei der Lokalisierung wird die zu lokalisierende Position Kontext eines wahrscheinlichsten zurückgelegten Pfades bestimmt. Dies geschieht mit Hilfe des bekannten Viterbi-Algorithmus, indem gemessene Verbindungsqualitäten mit den vorher trainierten Referenzverbindungsqualitäten verglichen werden.

Das Paper von Kay Connelly et al., "A Toolkit for Automatically Constructing Outdoor Radio Maps", Information Technology: Coding and Computing, 2005, ITCC 2005, International Conference on Las Vegas, NV, USA, beschreibt ein Konzept zur Erstellung von Kartenmaterial in Form von Radiofingerabdrücken an bestimmten Referenzpositionen. Dazu wird eine GPS-Einheit mit einer WiFi-Karte kombiniert, die von Leuten, die regelmäßig ein bestimmtes Gebiet ablaufen, wie z.B. Postboten oder Wachleuten, herangezogen wird, um Referenzdaten zu erzeugen.

Vor diesem Hintergrund besteht nun die Aufgabe der vorliegenden Erfindung darin, ein verbessertes Konzept zum Auffinden einer Position von Personen oder Dingen zu schaffen.

Diese Aufgabe wird durch eine Vorrichtung zum Lokalisieren einer Position gemäß Patentanspruch 1, einem Verfahren zum Lokalisieren einer Position gemäß Patentanspruch 14 oder ein Computer-Programm gemäß Patentanspruch 15 gelöst.

Der vorliegenden Erfindung liegt die Erkenntnis zugrunde, dass eine Position eines mobilen Funkempfängers auf einem Weg lokalisiert werden kann, wenn der Weg mittels spezifischer Umgebungsmerkmale, insbesondere mittels einer Erfassung von Eigenschaften von Funksignalen fest positionierter Funksendern entlang des Weges kenntlich gemacht wird.

Dies erfolgt gemäß Ausführungsbeispielen durch ein Ermitteln der Eigenschaften der Funksignale der fest positionierten Funksender an der zu ermittelnden Position auf dem Weg, wobei gemäß Ausführungsbeispielen der vorliegenden Erfindung das Ermitteln der Eigenschaften durch Aufzeichnungs- und Auswerteverfahren auf mobilen Endgeräten oder fest installierten Servern erfolgt, die die spezifischen Umgebungsmerkmale intelligent speichern und auswerten. Zur Orientierung werden Funksignale unterschiedlicher ortsfester Funksender genutzt. Diese können gemäß Ausführungsbeispielen der vorliegenden Erfindung WLAN-, Bluetooth oder GSM-Basisstationen sein. Bei bevorzugten Ausführungsformen ist eine Sendeleistung der ortsfesten Funksender konstant bzw. zumindest näherungsweise konstant. Bei einer variablen Sendeleistung, wie sie beispielsweise durch sogenannte Power-Control-Mechanismen in einem UMTS-System (UMTS = Universal Mobile Telecommunications System) oder WLAN Netz mit Power-Regelung vorkommt, kann das erfindungsgemäße Konzept eingesetzt werden, wenn eine aktuelle Sendeleistung einer Basisstation bekannt ist.

An der zu lokalisierenden Position wird gemäß Ausführungsbeispielen mit einem mobilen Funkempfänger nach Signalen ortsfester Funksender gesucht und deren Netzwerk-Kennung, wie beispielsweise eine MAC-Adresse (MAC = Media Access Control) bzw. Ethernet-ID oder Zellkennung und eine jeweilige Signalcharakteristik des von dem Funksender ausgestrahlten Funksignals, wie beispielsweise eine Empfangsfeldstärke am mobilen Funkempfänger, ein Empfangsspektrum oder ein Signalrauschabstand gespeichert. Eine einem durchschrittenen Weg entsprechende zeitliche Abfolge der Kennungen der ortsfesten Funksender mit ihren zugehörigen gemessenen Signaleigenschaften ist charakteristisch für diesen Weg bzw. Laufweg. Der Laufweg ist dabei also lediglich durch eine zeitliche Abfolge der Messwerte charakterisiert, ohne dabei eine Ortsangabe auf einer Umgebungskarte aufzuweisen, wo diese Messwerte aufgenommen wurden.

Um sich auf einen Laufweg bzw. Trail lokalisieren zu können, werden gemäß Ausführungsbeispielen der vorliegenden Erfindung die ermittelten Eigenschaften der Funksignale der fest positionierten Funksender an der momentanen Position des mobilen Geräts mit vorher aufgezeichneten Eigenschaften verglichen, die einen bereits vorher begangenen Referenzweg charakterisieren, und nach Übereinstimmungen gesucht. Über die Übereinstimmungen kann eine Beziehung zwischen der Position und dem Referenzweg aufgrund eines Ergebnisses des Vergleiches der ermittelten Eigenschaften mit den vorher aufgezeichneten Eigenschaften hergestellt werden. Wichtig ist, dass der Referenzweg (wahlweise auch "Trail") lediglich die zeitliche Abfolge der ermittelten Eigenschaften der Funksignale charakterisiert wird. Ein Referenzweg kommt insbesondere ohne jeglichen Ortsbezug (z.B. Festlegung des Wegs in einem Koordinatensystem) aus.

Gemäß Ausführungsbeispielen der vorliegenden Erfindung kann ein Nutzer durch das Vergleichen von Eigenschaften der Funksignale an der aktuellen Position mit den vorher aufgezeichneten Eigenschaften des Referenzwegs auf dem Referenzweg geführt werden.

Gemäß Ausführungsbeispielen ist eine Einrichtung zum Vergleichen und zum Bestimmen einer Beziehung zwischen der Position und dem Referenzweg ausgebildet, um ein Wahrscheinlichkeitsmaß zu ermitteln, das angibt, mit welcher Wahrscheinlichkeit die aktuelle Position eines Nutzers mit mobilem Gerät auf dem Referenzweg liegt. Dabei kann der Referenzweg einen Weg bedeuten, entlang dem vorher bereits die Eigenschaften der Funksignale der fest positionierten Funksender entlang des Weges aufgezeichnet wurden.

Gemäß einem weiteren Ausführungsbeispiel der vorliegenden Erfindung kann der Referenzweg auch durch eine Suche von Schnittpunkten einer Mehrzahl von Wegen ermittelt werden, wobei die aktuelle Position eines Nutzers und die gefundenen Schnittpunkte einem Routing-Algorithmus, insbesondere einem auf dem Dijkstra-Algorithmus basierenden Routing-Alorithmus, zur Berechnung des Referenzwegs übergeben werden. Dabei bilden die Schnittpunkte die Knoten, die Wege zwischen den Schnittpunkten die Kanten in einem Graph, auf den der Routing-Algorithmus angewendet wird. Dazu weist eine Vorrichtung zum Lokalisieren einer Position auf einem Weg gemäß Ausführungsbeispielen eine Einrichtung zum Aufbereiten der ermittelten Eigenschaften der Funksignale entlang der Wege auf, um beispielsweise RSSI-Werte (RSSI = Received Signal Strength Indication) von den von den ortsfesten Funksendern empfangenen Signalen zu filtern, insbesondere mit einem Tiefpassfilter. Ferner ist dazu eine Einrichtung zum Vergleichen ausgebildet, um einen Teil der ermittelten Eigenschaften eines ersten Weges mit vorher aufgezeichneten Eigenschaften eines Referenzweges bzw. zweiten Weges zu vergleichen, wobei der Teil ermittelte Eigenschaften bedeutet, die um ein Vielfaches des vordefinierten zeitlichen Abstandes auseinander liegen, in dem die Eigenschaften ermittelt wurden.

Gemäß einem weiteren Ausführungsbeispiel schafft die vorliegende Erfindung eine Vorrichtung zum Lokalisieren einer Position auf einem Weg, wobei entlang des Weges Funksignale von fest positionierten Funksendern empfangbar sind mit einer Einrichtung zum Messen von Eigenschaften der Funksignale der fest positionierten Funksender an der Position, einer Einrichtung zum Übermitteln der gemessenen Eigenschaften der Funksignale zu einem Server und einer Einrichtung zum Empfangen von Lokalisationsinformationen von dem Server, wobei die Lokalisationsinformationen auf einer Beziehung zwischen der Position und einem Referenzweg basieren, wobei die Beziehung durch ein Vergleichen der gemessenen Eigenschaften mit vorher aufgezeichneten Eigenschaften, die den Referenzweg charakterisieren, basiert. Hier kann es sich beispielsweise um einen PDA (PDA = Personal Digital Assistant) mit einer WLAN-Karte oder ein Mobiltelefon handeln, um die Eigenschaften der Funksignale zu empfangen. Die Eigenschaften der Funksignale können dann beispielsweise an einen zentralen Server übermittelt werden, um dort mit vorher aufgezeichneten und gespeicherten Wegen verglichen zu werden, oder um durch Vergleichen eine Schnittpunktsuche einer Mehrzahl von Wegen durchführen zu können und basierend darauf einen neuen Referenzweg bzw. eine Lokalisationsinformation ermitteln zu können.

Ausführungsbeispiele der vorliegenden Erfindung schaffen einen Server zum Lokalisieren einer Position auf einem Weg, wobei entlang des Weges Funksignale von fest positionierten Funksendern empfangbar sind mit einer Einrichtung zum Empfangen von Eigenschaften der Funksignale der fest positionierten Funksender an der Position und einer Einrichtung zum Vergleichen der empfangenen Eigenschaften mit vorher aufgezeichneten Eigenschaften, die einen Referenzweg charakterisieren, und zum Bestimmen einer Beziehung zwischen der Position und dem Referenzweg aufgrund eines Ergebnisses der Einrichtung zum Vergleichen und einer Einrichtung zum Übertragen einer Lokalisationsinformation, wobei die Lokalisationsinformation auf der Beziehung zwischen der Position und dem Referenzweg basiert.

Dabei ist der Server beispielsweise ausgebildet, um die von einem mobilen Endgerät in vordefinierten zeitlichen Abständen $\Delta T$ gemessenen Signaleigenschaften, wie beispielsweise der Netzwerk-Kennung eines sogenannten Access-Points bzw. einer Basisstation, sowie deren Empfangsfeldstärke $RSSI_k(i\Delta T)$ zu empfangen, wobei k einen Funksender und i das i-te Zeitintervall bedeutet. Die von dem Teilnehmergerät übermittelten Signaleigenschaften können dann gemäß Ausführungsbeispielen in einer zentralen Datenbank gespeichert werden, wobei die zeitliche Abfolge der gemessenen Signaleigenschaften den von dem Teilnehmergerät durchschrittenen bzw. durchfahrenen Weg charakterisiert und somit als ein Referenzweg (im Folgenden auch als "Trail" bezeichnet) in der Datenbank abgelegt werden kann. Empfängt der Server nun erneute Messwerte von Funksignalen von einem Teilnehmer, so können bereits vorher aufgezeichnete Eigenschaften von Funksignalen aus der Datenbank herangezogen werden, um die der aktuellen Position entsprechenden Signaleigenschaften mit den vorher aufgezeichneten Signaleigenschaften eines Referenzwegs zu vergleichen. Basierend darauf kann einen Beziehung zwischen der aktuellen Position und dem Referenzweg beispielsweise in Form eines Schnittpunktes oder einer Wahrscheinlichkeit, dass sich die Position auf dem Referenzweg befindet, angegeben werden.

Ein Vorteil der vorliegenden Erfindung besteht darin, dass das erfindungsgemäße Konzept zum Lokalisieren einer Position ohne Ortsbezug auskommt. Es sind also keine Karten einer Umgebung oder eine Datenerfassungsphase, wie beispielsweise das Einlernen beim so genannten RF-Fingerprinting (Datenbank mit Senderposition bei der Trilateration) nötig. Ein Benutzer kann beispielsweise durch intuitive Kommandos oder durch eine Visualisierung (beispielsweise durch Farben, die angeben, wie gut die eigene Bewegung zum Referenzweg bzw. Trail passt) oder auch durch Audiosignale geführt werden.

Ein weiterer Vorteil der vorliegenden Erfindung besteht darin, dass das erfindungsgemäße Konzept in seiner Bedienung auch für wenig technikversierte Nutzer leicht verständlich ist.

Wird das Vergleichen der ermittelten Eigenschaften der Funksignale an der Position mit den vorher aufgezeichneten Eigenschaften, die einen Referenzweg charakterisieren, beispielsweise auf einem zentralen Server durchgeführt, werden minimale Rechenanforderungen an ein mobiles Endgerät, wie beispielsweise einem PDA, gestellt. Damit ist das erfindungsgemäße Konzept neben PDAs und Mobiltelefonen auch für Kleinstplattformen ohne Displays, wie beispielsweise drahtlosen Funkknoten in Sensornetzen, iPods, etc., einsetzbar.

Ein weiterer Vorteil der vorliegenden Erfindung besteht darin, dass ein erfindungsgemäßes Lokalisations- bzw. Navigationssystem, welches beispielsweise ein mobiles Endgerät und einen Server umfasst, in jeder Umgebung mit drahtlosen Netzen ohne Vorarbeiten verwendbar ist und zusätzlich vollkommen unabhängig von einer Netzwerktechnologie ist. Ein Austausch von Trail- bzw. Referenzweginformationen kann über ein beliebiges Netzwerk erfolgen. Für Anwendungen des erfindungsgemäßen Konzepts, die keine Führung zu einem Kommunikationspartner eines Nutzers beinhalten, wie z.B. ein Zurückfinden zu einem Auto, ist kein Netzwerkzugang und kein Server zum Datenaustausch notwendig, da hier sämtliche Funktionalitäten, d.h. das Ermitteln der Eigenschaften der Funksignale, das Vergleichen der ermittelten Eigenschaften mit vorher aufgezeichneten Eigenschaften und das Bestimmen der Beziehung zwischen der Position und dem Referenzweg auf dem mobilen Endgerät ablaufen können.

Ein weiterer Vorteil der vorliegenden Erfindung ist ein Verzicht auf Umgebungskarten mit Koordinaten, welche oftmals nicht verfügbar sind und, insbesondere für einen Innen- bzw. Indoorbereich aufwändig erstellt werden müssen. Bei herkömmlichen Leitsystemen basierend auf Lokalisierung sind Umgebungskarten notwendig, um gangbare Wege identifizieren zu können. Andernfalls würden Routen berechnet, die in der Praxis aufgrund von Hindernissen nicht als Laufwege möglich sind. Das erfindungsgemäße Konzept löst sich von dieser Notwendigkeit von Umgebungskarten, da nur Wege betrachtet werden, die von Benutzern schon erfolgreich durchschritten wurden. Insbesondere ist durch das erfindungsgemäße Konzept auch eine Abschätzung von realen Laufdistanzen ohne Umgebungskarten möglich.

Bevorzugte Ausführungsbeispiele der vorliegenden Erfindung werden nachfolgend Bezug nehmend auf die beiliegenden Zeichnungen näher erläutert. Es zeigen:

Fig. 1.            Ein Flussdiagramm zur Veranschaulichung eines Verfahrens zum Lokalisieren einer Position auf einem Weg gemäß einem Ausführungsbeispiel der vorliegenden Erfindung;

Fig. 2          eine beispielhafte Folge von Messpaketen;

Fig. 3          eine schematische Darstellung der Funktionsweise einer Navigation mittels einer Lokalisation einer Position auf einem Weg gemäß einem Ausführungsbeispiel der vorliegenden Erfindung;

Fig. 4          einen beispielhaften Signalverlauf eines von einem fest positionierten Funksenders empfangenen Funksignals entlang eines Weges;

Fig. 5          den Signalverlauf aus Fig. 5, nachdem negative Signalsprünge aus dem Signalverlauf herausgefiltert wurden;

Fig. 6          einen tiefpassgefilterten Signalverlauf einer Empfangsfeldstärke eines Funksignals von einem fest positionierten Funksender vor und nach einer Interpolation gemäß einem Ausführungsbeispiel der vorliegenden Erfindung;

Fig. 7          einen tiefpassgefilterten Signalverlauf und die zeitliche Ableitung des Signalverlaufs;

Fig. 8          einen vergrößerten Signalverlauf und dessen zeitliche Ableitung zur Erläuterung einer Interpolation gemäß einem Ausführungsbeispiel der vorliegenden Erfindung;

Fig. 9          ein Schaubild zur Erläuterung eines Algorithmus zu einer Schnittpunktsuche bzw. zum Vergleichen von ermittelten Eigenschaften mit vorher aufgezeichneten Eigenschaften, die einen Referenzweg charakterisieren, gemäß einem Ausführungsbeispiel der vorliegenden Erfindung;

Fig. 10a        ein Schaubild zur Erläuterung einer ersten Stufe des gezeigten Algorithmus;

Fig. 10b        ein Schaubild zur Erläuterung einer zweiten Stufe des gezeigten Algorithmus gemäß einem Ausführungsbeispiel der vorliegenden Erfindung;

Fig. 10c        ein Schaubild zur Erläuterung einer dritten Stufe des in Fig. 10 gezeigten Algorithmus gemäß einem Ausführungsbeispiel der vorliegenden Erfindung;

Fig. 11a        bis 11c Schaubilder zur näheren Erläuterung der dritten Stufe des gezeigten Algorithmus gemäß Ausführungsbeispielen der vorliegenden Erfindung;

Fig. 12         ein Struktogramm zur Auswertung höherwertigere Ergebnisse des gezeigten Algorithmus gemäß Ausführungsbeispielen der vorliegenden Erfindung;

Fig. 13         ein Struktogramm zur Auswertung minderwertigerer Ergebnisse des gezeigten Algorithmus gemäß Ausführungsbeispielen der vorliegenden Erfindung;

Fig. 14         eine Darstellung eines einzelnen Schnittpunktes zwischen zwei Referenzwegen;

Fig. 15         eine Darstellung zur Erläuterung der Mittelwertbildung bei einem einzelnen Schnittpunkt zwischen zwei Referenzwegen gemäß einem Ausführungsbeispiel der vorliegenden Erfindung;

Fig. 16         eine schematische Darstellung verschiedener Bewegungsmuster bei zwei Referenzwegen;

Fig. 17         eine schematische Darstellung von Clustern von Fig. 16;

Fig. 18         zwei aufeinander liegende Referenzwege;

Fig. 19         eine Darstellung verschiedener Bewegungsmuster mit zwei Referenzwegen, die teilweise aufeinander liegen,

Fig. 20         eine Darstellung zur näheren Erläuterung einer Cluster-Bildung von möglichen Ergebnissen für Schnittpunkte zwischen Referenzwegen gemäß einem Ausführungsbeispiel der vorliegenden Erfindung;

Fig. 21          eine schematische Darstellung zur Erläuterung einer Einhaltung eines richtigen Wegablaufsinns;

Fig. 22          eine schematische Darstellung zur Erläuterung von Anforderungen an einen Leitalgorithmus;

Fig. 23          eine schematische Darstellung zur Erläuterung von Wahrscheinlichkeiten, die gemäß einem Ausführungsbeispiel der vorliegenden Erfindung auftreten und ausgegeben werden können;

Fig. 24          ein Blocksschaltbild des Zusammenspiels zwischen Client und Server; und

Fig. 25          eine schematische Darstellung von vier Referenzwegen durch eine Halle.

Fig. 26a bis 26d    Beispiele einer intuitiven Führung durch den Leitalgorithmus, gemäß Ausführungsbeispielen der vorliegenden Erfindung.

Bezüglich der nachfolgenden Beschreibung sollte beachtet werden, dass bei den unterschiedlichen Ausführungsbeispielen gleiche oder gleich wirkende Funktionselemente gleiche Bezugszeichen aufweisen und somit die Beschreibungen dieser Funktionselemente in den verschiedenen nachfolgend dargestellten Ausführungsbeispielen untereinander austauschbar sind.

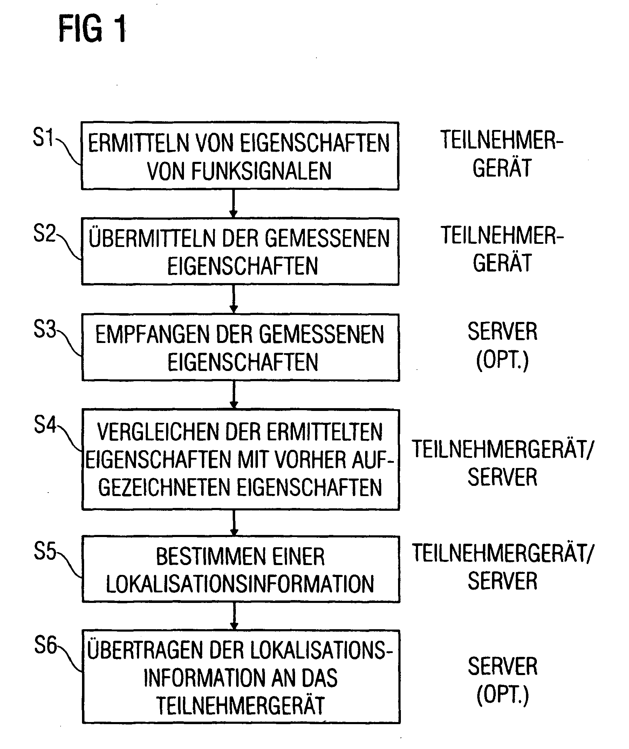

Im Nachfolgenden wird anhand der Fig. 1 bis 24 das erfindungsgemäße Konzept zum Lokalisieren einer Position auf einem Weg beschrieben, wobei entlang des Weges Funksignale von fest positionierten Funksendern empfangbar sind. Dazu zeigt Fig. 1 zunächst ein Flussdiagramm zur Veranschaulichung eines Verfahrens zum Lokalisieren einer Position auf einem Weg gemäß einem Ausführungsbeispiel der vorliegenden Erfindung.

Das in Fig. 1 gezeigte Verfahren zur Lokalisation weist einen ersten Schritt S1 des Ermittelns von Eigenschaften von Funksignalen der fest positionierten Funksender an der Position von einem mobilen Gerät bzw. Client auf. Darauf kann gemäß Ausführungsbeispielen ein zweiter optionaler Schritt S2 des Übermittelns der ermittelten Eigenschaften von Funksignalen zu einem Server folgen. Auf den optionalen Schritt S2 des Übermittelns kann ein weiterer optionaler Schritt S3 des Empfangens der übermittelten ermittelten Eigenschaften der Funksignale von dem Server erfolgen. Daraufhin folgt ein Schritt S4 des Vergleichens der ermittelten Eigenschaften mit vorher aufgezeichneten Eigenschaften, die einen Referenzweg charakterisieren und des Bestimmens einer Beziehung zwischen der Position und dem Referenzweg aufgrund eines Ergebnisses des Vergleichens. Aufgrund eines Resultats des Schritts S4 wird gemäß einem Ausführungsbeispiel der vorliegenden Erfindung in einem Schritt S5 eine Lokalisationsinformation bestimmt, wobei die Lokalisationsinformation auf der Beziehung zwischen der Position und dem Referenzweg basiert. Schließlich kann gemäß Ausführungsbeispielen in einem Schritt S6 die Lokalisationsinformation beispielsweise von dem zentralen Server an den Client übermittelt werden.

Der Schritt S1 des Ermittelns der Eigenschaften von Funksignalen wird gemäß Ausführungsbeispielen der vorliegenden Erfindung von einem Client durchgeführt, wie beispielsweise einem WLAN-fähigen PDA, einem Bluetooth-fähigen PDA oder z.B. auch einem Mobiltelefon. Dazu weist der Client eine Einrichtung zum Ermitteln bzw. Messen der Eigenschaften der Funksignale fest positionierter Funksender auf, wobei die Eigenschaften im Allgemeinen gekennzeichnet sind durch eine Kennung eines fest positionierten Funksenders und dessen Signalcharakteristik, wie beispielsweise eine Empfangsfeldstärke, ein Empfangsspektrum oder ein empfangener Signalrauschabstand. Die Kennung bzw. ein identifizierendes Merkmal eines fest positionierten Funksenders kann beispielsweise seine MAC-Adresse oder eine Zellkennung sein.

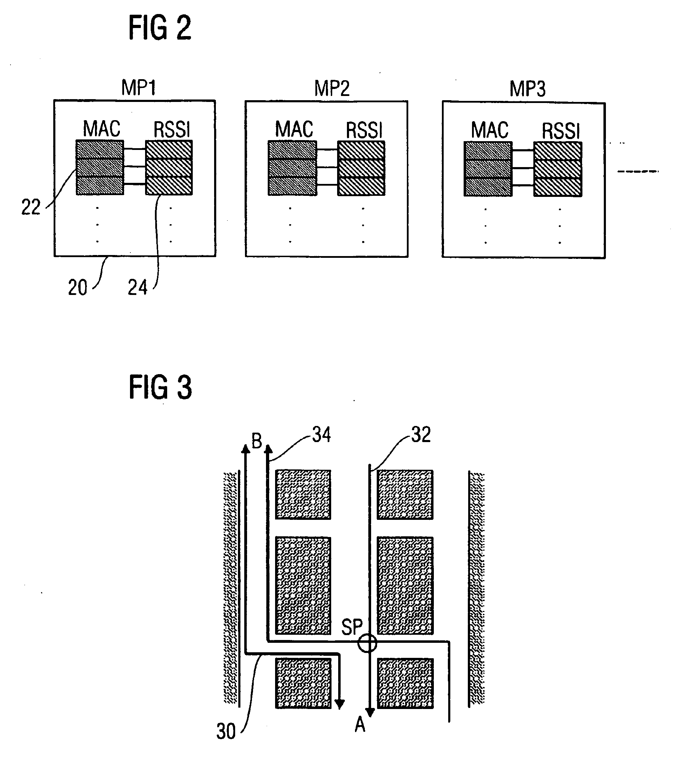

Bei einer Bewegung entlang eines Weges bzw. entlang eines Laufweges werden die Eigenschaften der Funksignale der fest positionierten Funksender in vordefinierten zeitlichen Abständen $\Delta T$ ermittelt und entsprechend ihrer Ermittlungszeit $t=i\Delta T$ in so genannten Messpaketen zusammengefasst. Dieser Sachverhalt ist in Fig. 2 gezeigt.

Fig. 2 zeigt beispielhaft drei zeitlich aufeinander folgende Messpakete aus einem WLAN Netzwerk MP(1), MP(2), MP(3), d.h. i=1,2,3 , wobei ein Messpaket MP(i) jeweils eine Mehrzahl von MAC-Adressen 22 und zugehörigen RSSI-Werten $RSSI_k(i)$ aufweist, wobei der Index k auf den k-ten Funksender hindeutet. Das heißt, pro Zeitintervall i, welches gemäß Ausführungsbeispielen in einem Bereich von 10 Millisekunden bis 10 Sekunden liegen kann, werden die MAC-Adressen der fest positionierten Funksender, sowie deren vom Client empfangene RSSI-Werte $RSSI_k(i)$ in einem Messpaket MP(i) zusammengefasst.

Die elektromagnetischen Eigenschaften an jeder Position bzw. jedem Messpunkt werden als so genannter Radio-Fingerabdruck bezeichnet, da sie diesen Messpunkt meist eindeutig identifizieren. Wird von einem Client ein Weg abgelaufen und entlang dieses Weges zu den Zeitpunkten $t=i\Delta T$ die Messpakte MP(i) aufgezeichnet, so charakterisieren diese Messpakte MP(i) eindeutig den durchschrittenen Laufweg. Dies ist anhand von Fig. 3 exemplarisch gezeigt.

In Fig. 3 bewegen sich zwei Clients A und B beispielsweise innerhalb eines Gebäudes. Der mit dem Bezugszeichen 30 gekennzeichnete Weg verbindet die Positionen der Clients A, B und die Position des Schnittpunkts SP der beiden Wege miteinander. Die mit dem Bezugszeichen 32 gekennzeichnete Linie kennzeichnet den Laufweg von Client A und die mit Bezugzeichen 34 gekennzeichnete Linie kennzeichnet den Laufweg des Clients B.

Ein Laufweg bzw. ein Trail stellt eine Gesamtheit aller in der Reihenfolge ihrer Entstehung ermittelten Messpakte MP(i) dar. Ein Messpaket MP(i) wiederum stellt die elektromagnetischen Eigenschaften desjenigen Ortes dar, an dem es angefragt bzw. gemessen wurde. Beispielsweise wird alle $\Delta T$ = 200 ms ein neues Messpaket MP(i) ermittelt. Über die Trails 32 und 34 besteht eine Verbindung zwischen den Strecken [A,SP] und [B,SP]. Dadurch stehen die Positionen der Clients A, B und des Schnittpunkts SP in bestimmten Relationen zueinander. Dies ist beispielsweise eine Anzahl der Messpakete bzw. eine daraus ableitbare Zeit. Setzt man beispielsweise die Position von Client A auf eine Koordinate 0, so ergibt sich die Koordinate von SP aus der Anzahl von Messpakten von A nach SP und die Koordinate von B aus der Anzahl von Messpakten von A nach SP plus der Anzahl von Messpaketen von SP nach B.

Da die in Fig. 3 gezeigten Positionen von A, B und SP über Trails, charakterisiert durch Messpakete MP(i) verbunden sind und ein Messpaket MP(i) eine geographische Position zumindest indirekt widerspiegelt, sollte also eine erste Bedingung, über die sich im Allgemeinen Navigation definiert, nämlich eine Fähigkeit eine geographische Position bestimmen zu können, erfüllt sein. Eine zweite Bedingung verlangt, dass ein Leitweg zwischen A und B errechnet wird. Schließlich verlangt eine dritte Bedingung eine Führung von A und B. Sowohl die Berechnung des Leitweges als auch die Führung durch einen Leitalgorithmus wird im Nachfolgenden noch beschrieben. Gemäß Ausführungsbeispielen der vorliegenden Erfindung kann ein Client die von ihm ermittelten Messpakete, gemäß dem optionalen Schritt S2, beispielsweise einem zentralen Server übermitteln. Empfängt der Server die ihm von dem Client übermittelten charakteristischen Eigenschaften (optionaler Schritt S3), so kann dieser die ermittelten Eigenschaften mit bereits vorher aufgezeichneten Eigenschaften, die einen bereits durchschrittenen Referenzweg charakterisieren vergleichen und eine Beziehung zwischen der Position und dem Referenzweg aufgrund eines Ergebnisses des Vergleichens bestimmen (Schritt S4). Dazu weist ein Client gemäß Ausführungsbeispielen eine Einrichtung zum Messen von Eigenschaften von Funksignalen der fest positionierten Funksender an der Position, eine Einrichtung zum Übermitteln der gemessenen Eigenschaften zu einem Server und ferner einer Einrichtung zum Empfangen von einer Lokalisierungsinformation von dem Server auf, wobei die Lokalisierungsinformationen auf einer Beziehung zwischen der Position und einem Referenzweg basieren, wobei die Beziehung durch ein Vergleichen der gemessenen Eigenschaften mit vorher aufgezeichneten Eigenschaften, die den Referenzweg charakterisieren, basiert. Ein Server weist dementsprechend gemäß Ausführungsbeispielen eine Einrichtung zum Erhalten von Eigenschaften von Funksignalen der fest positionierten Funksender an der Position und eine Einrichtung zum Vergleichen der bestimmten Eigenschaften mit vorher aufgezeichneten Eigenschaften, die einen Referenzweg charakterisieren und zum Bestimmen einer Beziehung zwischen der Position und dem Referenzweg aufgrund eines Ergebnisses des Vergleichens, auf.

Das erfindungsgemäße Konzept kann beispielsweise dazu benutzt werden, dass sich Kommunikationspartner mit Endgeräten mit beispielsweise einer IEEE 802.11 WLAN-Schnittstelle in einem begrenzten Areal gegenseitig auffinden können. Dazu ist auf dem begrenzten Areal ein WLAN-Netzwerk installiert. Die Endgeräte können also miteinander kommunizieren und zusätzlich eine Empfangsfeldstärke von Basisstationen bzw. Access-Points bestimmen. Die Kommunikation kann jedoch auch über eine beliebige andere Technologie erfolgen. Das gegenseitige Auffinden erfolgt durch einen Abgleich bzw. Vergleich von Empfangsfeldstärken. Durch Informationen über ungefähre bzw. genaue Positionen und eventuell zur Verfügung gestellten Kommunikationsmöglichkeiten wird ein gegenseitiges Auffinden ermöglicht. Dabei werden durch einen Vergleich der Historie von Messwerten bzw. Messpakten MP(i) zweier Kommunikationspartner (Clients) Schnittpunkte zwischen den jeweiligen Laufwegen bzw. Trails der Clients ermittelt, um anschließend beide Clients auf kürzestem Wege zusammenführen zu können, so wie es schematisch in Fig. 3 gezeigt ist.

Grundsätzlich ist mit einer Suche nach Schnittpunkten SP eine Suche nach ähnlichen Messpaketen in den breiten Laufwegen gemeint. Ein Schnittpunkt definiert somit einen Ort bzw. eine Position, an der beide Clients A und B schon einmal gewesen sind.

Fig. 2 zeigt eine Ausgangssituation für einen Schnittpunktsuche, nämlich einen Trail in seinem Rohformat aus Messpaketen MP(i). Wie im Vorhergehenden bereits beschrieben wurde, ist eine Information über den Abstand in Form einer Anzahl an Messpaketen zwischen dem Punkt A und SP sowie B und SP wichtig für eine Navigation bzw. eine indirekte Lokalisierung. Deshalb wird jedes Messpaket MP(i) zunächst um die Nummer i seiner Position innerhalb des Trails erweitert.

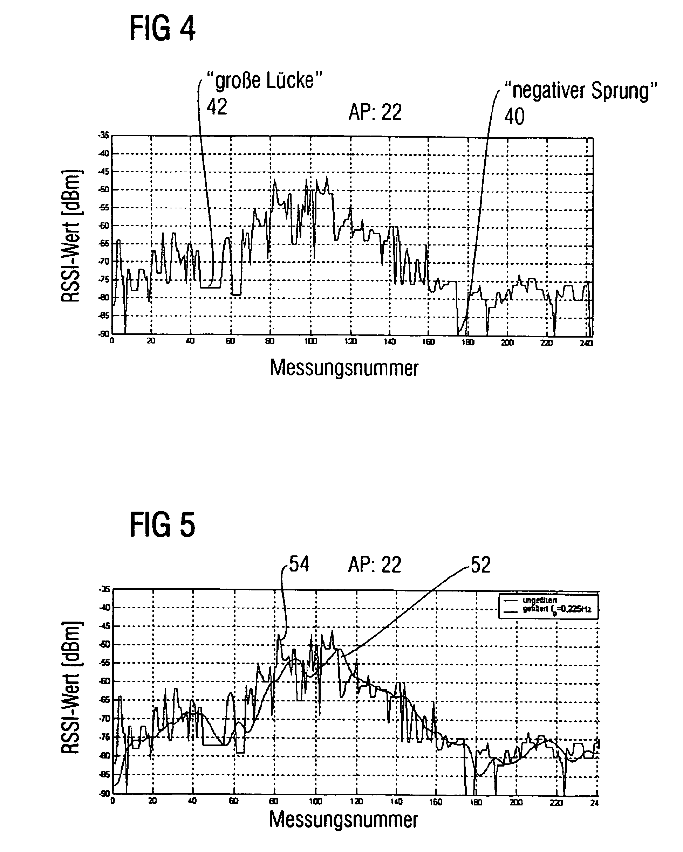

Betrachtet man einen Signalverlauf des empfangenen RSSI-Wertes in dBm eines fest positionierten Funksenders bzw. Access-Points k, ergibt sich ein Verlauf, so wie er beispielhaft in Fig. 4 dargestellt ist. Auf der Abszisse der Fig. 4 sind die Positionsnummern i (Messungsnummer) der Messpakete MP(i) aufgetragen. Diese Werte lassen sich auch direkt in eine Zeit umrechnen, da bei einem Messintervall von beispielsweise $\Delta T$ = 200 ms in einer Sekunde genau fünf Messpakete ermittelt werden.

In dem in Fig. 4 dargestellten Signalverlauf ist ein gewisses Rauschen festzustellen, welches sich negativ auf Ergebnisse einer anschließenden Schnittpunktsuche auswirkt. Dies begründet sich darin, dass bei der Suche nach ähnlichen Messpaketen in einem Referenzweg die RSSI-Werte $RSSI_k(i)$ von jeweiligen Access-Points k eines Messpakets miteinander verglichen werden. Die eigentlich relevante Information steckt in der Hüllkurve des RSSI-Signals weshalb es auch das Ziel einer Signalaufbereitung ist, sich so gut wie möglich an diese Hüllkurve anzunähern. Die Aufbereitung findet gemäß Ausführungsbeispielen mittels einer Einrichtung zum Aufbereiten der ermittelten Eigenschaften der Funksignale statt. Dabei kann sich die Einrichtung zum Aufbereiten, je nach Anwendung, auf Seite des Clients, auf Seite des Servers oder auf beiden Seiten befinden.

Es ist wichtig, dass sich sowohl Signalverläufe $RSSI_k(i)$ der einzelnen Access-Points k eines Laufwegs nicht in ihrer Länge unterscheiden, als auch dass jeder Messungsnummer i ein RSSI-Wert $RSSI_k(i)$ zugeordnet wird. Der in Fig. 4 durch das Bezugszeichen 40 beispielhaft gekennzeichnete Fall "negativer Sprung" tritt beispielsweise dann auf, wenn ein Access-Punkt wegen einer Überlastung kein entsprechendes Funksignal für die Ermittlung des RSSI-Werts am Client zur Verfügung stellen kann. Tritt dieser Fall ein, so ist die Einrichtung zum Aufbereiten gemäß einem Ausführungsbeispiel der vorliegenden Erfindung ausgebildet, um für diese Lücke einen so genannten Default-Wert einzusetzen. Das heißt, die Einrichtung zum Aufbereiten ist ausgebildet, um einem Funksignal eines ortsfesten Funksenders eine vorbestimmte Signaleigenschaft zuzuordnen, falls von dem Funksender keine Signaleigenschaft ermittelbar ist, um jeweils eine gleiche Anzahl von ermittelten Eigenschaften pro Zeitintervall für verschiedene Funksender an der Position zu erhalten. Handelt es sich bei der Signaleigenschaft um RSSI-Werte und bei dem Funksender um einen WLAN-Access-Point, so wird gemäß einem Ausführungsbeispiel der vorliegenden Erfindung als Default-Wert beispielsweise -90 dBm eingesetzt. Außerdem wird, falls ein Access-Point innerhalb eines Laufweges nur kurz sichtbar ist, an allen weiteren Messzeitpunkten dieser Default-Wert als Messwert für diesen Access-Point gesetzt. Dadurch kann gewährleistet werden, dass sämtliche gemessene Signalverläufe von verschiedenen Access-Points eine gleiche Länge aufweisen.

Ein in Fig. 4 durch Bezugszeichen 40 gekennzeichnete Fall "negativer Sprung" ist gemäß Ausführungsbeispielen **dadurch gekennzeichnet, dass** sich zwei benachbarte RSSI-Werte $RSSI_k(i)$ und $RSSI_k(i+1)$ insofern unterscheiden, dass der RSSI-Wert an der Stelle i+1 um wenigstens einem vorbestimmten Wert kleiner ist als der RSSI-Wert an der Stelle i. Gemäß einem Ausführungsbeispiel der vorliegenden Erfindung beträgt der vorbestimmte Wert $\Delta RSSI_k$ = 12 dB. Um sicherstellen zu können, dass lediglich relativ schmale bzw. kurze "Ausreißer" nach unten ausgefiltert werden, wiederholt sich ein Gleichsetzen von zwei benachbarten RSSI-Werten $RSSI_k(i)$ und $RSSI_k(i+1)$ gemäß einem Ausführungsbeispiel der vorliegenden Erfindung nur maximal zweimal hintereinander um den negativen Sprung herauszufiltern, selbst wenn die Bedingung $RSSI_k(i+1) < (RSSI_k(i) - \Delta RSSI_k)$ weiterhin erfüllt wäre.

Ein Signalverlauf, bei dem negative Sprünge, wie im Vorhergehenden beschrieben wurde, durch eine Signalaufbereitung herausgefiltert wurden, ist beispielhaft in Fig. 5 dargestellt. Fig. 5 zeigt den RSSI-Signalverlauf von Fig. 4, jedoch ohne die negativen Signalsprünge auf den Default-Wert von -90 dBm. Dies ist beispielhaft durch das Bezugszeichen 50 gekennzeichnet, wo $RSSI_k(i) = RSSI_k(i+1)$ gilt.

Gemäß einem Ausführungsbeispiel der vorliegenden Erfindung weist die Einrichtung zum Aufbereiten einen Tiefpassfilter auf, um die in Fig. 5 gezeigte RSSI-Signalkurve mittels des Tiefpassfilters glätten zu können. Die Aufgabe des Tiefpassfilters ist es, unerwünschte Rauschanteile aus dem Signal zu entfernen. Gemäß einem Ausführungsbeispiel der vorliegenden Erfindung wird als Tiefpassfilter ein diskret realisierter Butterworth-Tiefpass 2. Ordnung verwendet. Ein Butterworth-Tiefpass zeichnet sich dadurch aus, dass dessen Übertragungsfunktion unterhalb einer Grenzfrequenz $f_g$ relativ lange horizontal verläuft und dann erst stark abfällt. Dies ist vorteilhaft, um auch bei einer kleinen Ordnung des Butterworth-Tiefpassfilters die Grenzfrequenz $f_g$ möglichst tief ansetzen zu können. Gemäß Ausführungsbeispielen liegt die Grenzfrequenz $f_g$ in einem Bereich von 0,2 Hz bis 0,3 Hz. Die in Fig. 5 mit dem Bezugszeichen 52 gekennzeichnete Kurve beschreibt den Signalverlauf des tiefpassgefilterten, verrauschten Signals 54, bei dem negative Sprünge 40 bereits entfernt worden sind, wie es im Vorhergehenden beschrieben wurde.

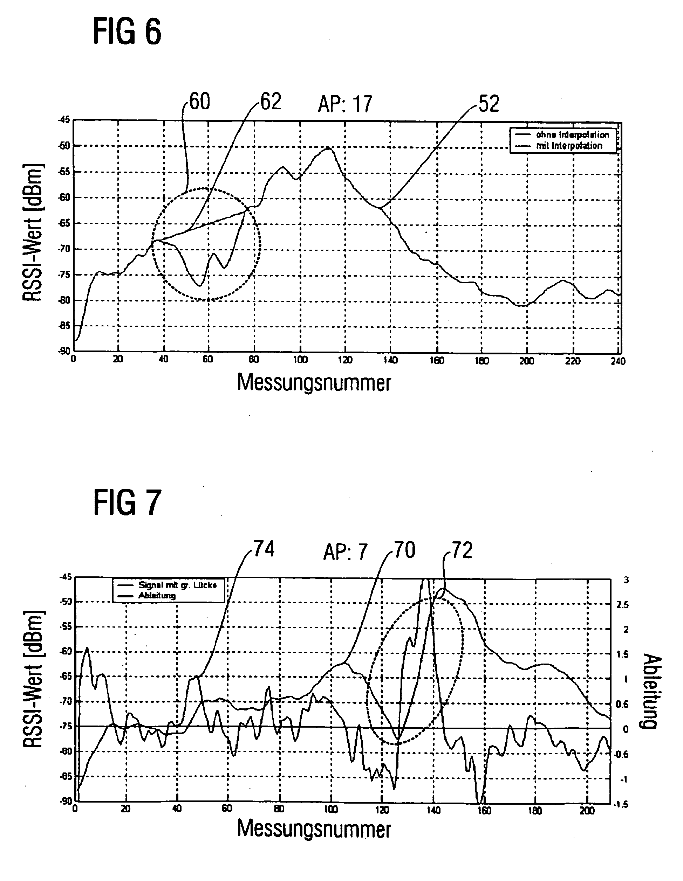

WLAN-Karten weisen zuweilen das Problem auf, das für eine gewisse Zeit keine Feldstärkemessungen durchgeführt werden. Von einer WLAN-Karte wird in diesem Fall jedoch so lange der zuletzt ermittelte RSSI-Wert defaultmäßig gesetzt, bis die Feldstärkemessung wieder funktioniert. Dieses Problem einer größeren Messlücke ist in Fig. 4 mit dem Bezugszeichen 42 gekennzeichnet. Aufgrund der Tatsache, dass eine WLAN-Karte in dem Messlückenbereich 42 nicht richtig arbeitet, zeigt sich so eine Messlücke in den jeweiligen RSSI-Signalverläufen $RSSI_k(i)$ von allen in Reichweite der WLAN-Karte befindlichen Access-Points. Dieses Problem ist am deutlichsten ersichtlich, wenn ein Verlauf 52 eines bereits tiefpassgefilterten RSSI-Signals betrachtet wird, wie er in Fig. 6 gezeigt ist.

Der Signalverlauf 52 beschreibt hier fälschlicherweise einen Einbruch 60 des Signals aufgrund einer Messlücke durch einen Messausfall, welcher Ergebnisse der nachfolgenden Schnittpunktsuche stark beeinflussen würde. Um eine Verfälschung der Schnittpunktsuche vermeiden zu können, sollten solche Signaleinbrüche 60 aufgrund von Messausfällen erkannt werden und ein Signalverlauf an diesen Stellen entsprechend interpoliert werden, wie es durch Bezugszeichen 62 dargestellt ist. Damit eine solche zusätzliche Interpolation durchgeführt werden kann, ist weist die Einrichtung zum Aufbereiten ferner eine Einrichtung zum Interpolieren des mittleren Signalverlaufs. Dabei sollte zunächst der genaue Bereich eines solchen durch eine Messlücke entstehenden Bereichs sicher erkannt werden. Kennzeichnend für diese Stellen sind verhältnismäßig große Neigungen im Signalverlauf (in Fig. 6 zwischen Messungsnummer i=40 bis i=60 und i=65 bis i=80), was auf hohe Werte der ersten Ableitung des Signalverlaufs 52 nach der Zeit schließen lässt.

Fig. 7 zeigt einen Signalverlauf 70 mit einer mit Bezugszeichen 72 gekennzeichneten großen Lücke. Des Weiteren zeigt Fig. 7 den Verlauf der ersten Ableitung nach der Zeit des Signals 70, gekennzeichnet mit dem Bezugszeichen 74.

Für einen Anfangs- und einen Endwert einer Interpolationsgeraden bei einer großen Lücke im Signalverlauf 70 werden entsprechende Wendepunkte im Signalverlauf benötigt. Diese Wendepunkte können ebenfalls durch Detektion von Nulldurchgängen im Signalverlauf der ersten Ableitung 74 ermittelt werden.

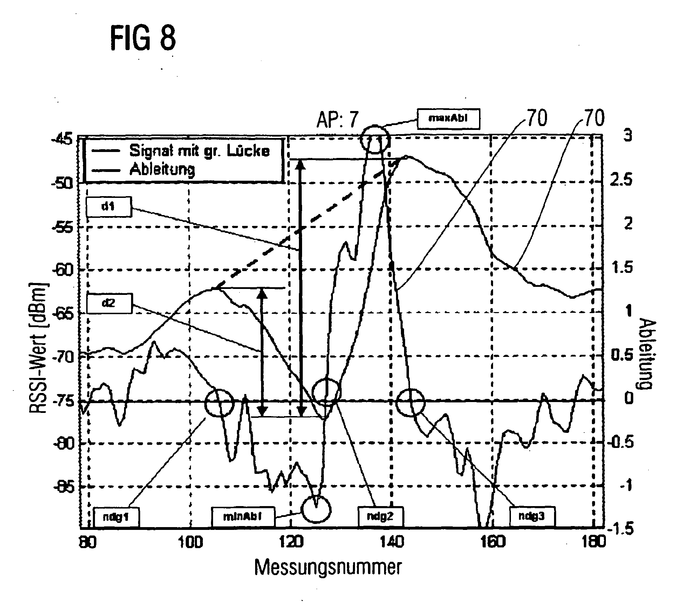

Wie gemäß einem Ausführungsbeispiel der vorliegenden Erfindung ein Messlückenbereich für eine Interpolation gefunden werden kann, soll im Nachfolgenden anhand von Fig. 8 näher erläutert werden.

Dazu zeigt Fig. 8 einen vergrößerten Ausschnitt der Signalverläufe 70 und 74 aus Fig. 7, wobei der Signalverlauf 70 der Verlauf der tiefpassgefilterten RSSI-Werte ist und der Verlauf 74 die entsprechende erste Ableitung des Signalverlaufs 70 ist. Fig. 8 zeigt einen ersten Nulldurchgang ndg1, einen zweiten Nulldurchgang ndg2 und einen dritten Nulldurchgang ndg3 aus dem Signal 74 der Ableitung. Des Weiteren zeigt Fig. 8 ein Maximum maxAb1 zwischen dem zweiten Nulldurchgang ndg2 und dem dritten Nulldurchgang ndg3 aus dem Signal 74 der Ableitung und ein Minimum MinAbl zwischen dem ersten Nulldurchgang ndg1 und dem zweiten Nulldurchgang ndg2 des Signals 74 der Ableitung.

Um einen Messlückenbereich für die Interpolation zu finden, wird gemäß Ausführungsbeispielen zwischen drei benachbarten Nulldurchgängen ndg1, ndg2 und ndg3 ein Minimum MinAbl und ein Maximum maxAbl des Signals 74 der Ableitung gesucht. Vorraussetzung für eine Interpolation ist die Erfüllung von zwei Bedingungen.

Sind MaxAbl und MinAbl jeweils größer bzw. kleiner als bestimmte Grenzwerte, gilt eine erste Beziehung als erfüllt. Gemäß Ausführungsbeispielen der vorliegenden Erfindung sind die verwendeten Kriterien $MaxAbl > X_1$ und $MinAbl < X_2$ oder $MaxAbl > X_3$ und $MinAbl < X_4$.

Mit anderen Worten ausgedrückt weist die Einrichtung zum Aufbereiten also ferner eine Einrichtung zum Interpolieren des mittleren Signalverlaufs 70 auf, wobei die Einrichtung zum Interpolieren ausgebildet ist, um den mittleren Signalverlauf 70 zu interpolieren, wenn ein Maximum maxAbl zwischen einem zweiten ndg2 und dritten Nulldurchgang ndg3 der Ableitung 74 des Signalverlaufs größer als $X_1$ und ein Minimum minAbl zwischen einem ersten ndg1 und dem zweiten Nulldurchgang ndg2 der Ableitung 74 des Signalverlaufs kleiner als $X_2$ oder das Maximum (maxAbl) zwischen dem zweiten ndg2 und dritten Nulldurchgang ndg3 der Ableitung 74 des Signalverlaufs größer als $X_3$ und das Minimum (minAbl) zwischen dem ersten ndg1 und zweiten Nulldurchgang ndg2 der Ableitung 74 des Signalverlaufs kleiner als $X_4$ ist.

Gemäß Ausführungbeispielen gilt $X_1 = 0,5$, $X_2 = -1$, $X_3 = 1$ und $X_4 = -0,5$. Natürlich sind hier auch andere Werte denkbar.

Um die zweite Bedingung zu erfüllen, ist eine Summe $d_1 + d_2$ größer sein als beispielsweise 10 dB, damit nur größere Lücken bearbeitet werden, wobei $d_1 = |RSSI_m| - |RSSI_{Start}|$ und $RSSI_m$ den RSSI-Wert des Signals 70 an dem zweiten Nulldurchgang ndg2 aus dem Signal 74 der Ableitung bedeutet und $RSSI_{Start}$ den RSSI-Wert des Signals 70 an der Stelle des ersten Nulldurchgangs ndg1 aus dem Signal 74 der Ableitung für den Start der Interpolation bedeutet. $d_2$ ergibt sich aus $d_2 = |RSSI_m| - |RSSI_{Ende}|$, wobei $RSSI_{Ende}$ den RSSI-Wert des Signals 70 an der Stelle des dritten Nulldurchgangs ndg3 aus dem Signal 74 der Ableitung für das Ende der Interpolation bedeutet.

Sind beide vorher genannten Kriterien erfüllt, kann die Interpolation durchgeführt werden. Umgesetzt wird dies gemäß Ausführungsbeispielen durch das Ersetzen aller RSSI-Werte in einem Bereich zwischen dem Start $i_{Start}$ der Interpolation entsprechend der Messungsnummer für den ersten Nulldurchgang ndg1 und dem Ende $i_{Ende}$ der Interpolation entsprechend der Messungsnummer für den Nulldurchgang ndg3 mit errechneten RSSI-Werten gemäß

$$RSSI(i) = RSSI_{Start} + \frac{(RSSI_{Ende} - RSSI_{Start})}{(i_{Ende} - i_{Start})} \cdot (i - i_{Start}) \qquad (1)$$

Die Nulldurchgänge des Signals 74 im Bereich von Messungsnummer 110 in Fig. 8 werden gemäß Ausführungsbeispielen nicht berücksichtigt, da sonst die erforderliche Interpolation nicht richtig ausgeführt würde. Um dies zu erkennen, wird der Abstand zwischen zwei benachbarten Nulldurchgängen gewertet. Ist der Abstand zu klein, so werden diese Nulldurchgänge vorgemerkt. In Abhängigkeit davon, ob die Anzahl der zu nahe beieinander liegenden Nulldurchgänge gerade oder ungerade ist, werden entweder alle entfernt oder es wird auf einen Nulldurchgang reduziert. Im in Fig. 8 gezeigten Fall ist die Anzahl zwei (bei steigender und fallender Flanke) und daher werden beide Nulldurchgänge aus der Menge der Nulldurchgänge entfernt.

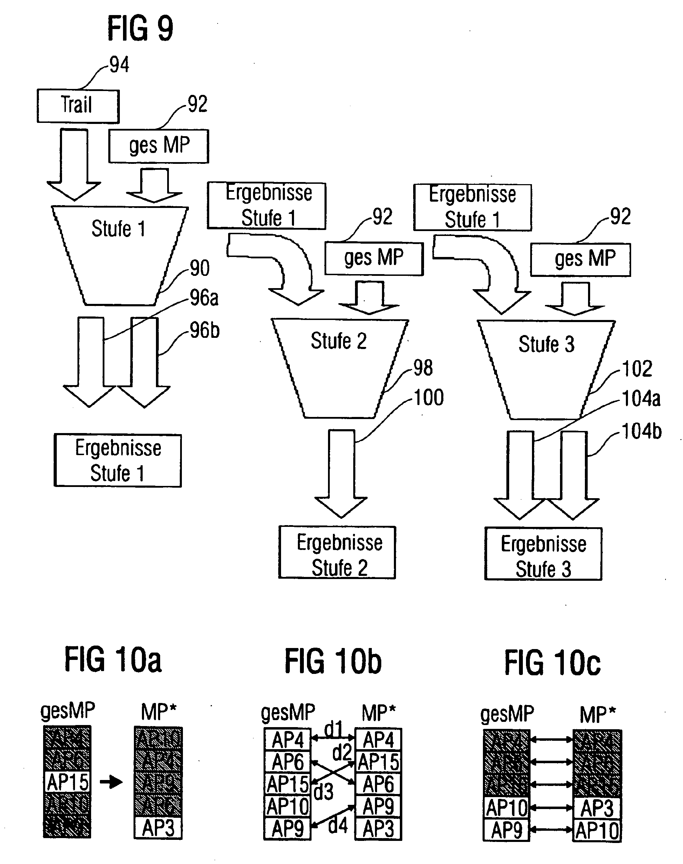

Wie im Vorhergehenden bereits beschrieben wurde, kann es sich bei der Position auf einem Weg auch um einen Schnittpunkt zwischen zwei Wegen handeln. Soll ein Schnittpunkt SP zwischen zwei Wegen bzw. Trails gefunden werden, kann prinzipiell jedes Messpaket $MP_1(i)$ aus einem ersten Weg mit jedem Messpaket $MP_2(i)$ aus einem zweiten Weg verglichen werden. Dies kann unter Umständen sehr rechenaufwändig sein. Daher wird gemäß Ausführungsbeispielen bei dem Vergleichen der ermittelten Eigenschaften mit vorher aufgezeichneten Eigenschaften lediglich einen Teil der ermittelten Eigenschaften mit den vorher aufgezeichneten Eigenschaften eines Referenzweges verglichen, wobei der Teil ermittelter Eigenschaften bedeutet, die um ein Vielfaches des vordefinierten zeitlichen Abstandes ΔT auseinander liegen, in denen die Eigenschaften ermittelt wurden. Beispielsweise wird also nur jedes zehnte Messpaket des ersten Weges in den gesamten Messpaketen des zweiten Weges gesucht. Dazu zeigt Fig. 9 schematisch eine Vorgehensweise zum Vergleichen bzw. zur Schnittpunktsuche gemäß einem Ausführungsbeispiel der vorliegenden Erfindung.

Fig. 9 zeigt drei Stufen eines Schnittpunktsuchalgorithmus bzw. SP-Algorithmus, der bei dem Schritt S4 des Vergleichens von einer Einrichtung zum Vergleichen ausgeführt wird.

Einer ersten Stufe 90 wird ein gesuchtes Messpaket gesMP 92 eines ersten Laufweges und eine Gesamtheit aller Messpakete MP* 96 des zweiten Weges zugeführt. Durch einen Vergleich von dem gesuchten Messpaket gesMP 92 mit den Messpaketen MP* 94 des zweiten Weges bzw. des Referenzweges werden am Ausgang der ersten Vergleichsstufe 90 Ergebnismengen EM1a und EM1b zur Verfügung gestellt, wobei die Ergebnismenge EM1a eine niedrigere Qualität aufweist als die Ergebnismenge EM1b.

Gemäß Ausführungsbeispielen kann einer zweiten Vergleichsstufe 98 die Ergebnismenge EM1a zugeführt werden, um die Messpakete der Ergebnismenge EM1a mit dem gesuchten Messpaket gesMP 92 zu vergleichen und daraufhin am Ausgang der zweiten Vergleichsstufe 98 eine Ergebnismenge EM2 bereitzustellen.

Gemäß weiteren Ausführungsbeispielen der vorliegenden Erfindung kann die Ergebnismenge EM1a der ersten Vergleichsstufe 90 zusammen mit dem gesuchten Messpaket gesMP 92 einer dritten Vergleichsstufe 102 zugeführt werden und an deren Ausgang eine Ergebnismenge EM3a und eine weitere Ergebnismenge EM3b zu erhalten, wobei die Ergebnismenge EM3b eine höhere Qualität aufweist als die Ergebnismenge EM3a.

Jede der drei Vergleichsstufen 90, 98, 102 benötigt an ihrem Eingang das gesuchte Messpaket gesMP 92 und eine Menge aus Messpaketen, mit welcher gesMP verglichen werden kann. Besteht ein bestimmter Grad an Ähnlichkeit von einem Messpaket MP* aus der Menge von Messpaketen zu gesMP, so geht das jeweilige Messpaket MP* aus der Referenzmenge in die Ergebnismenge der jeweiligen Stufe ein. Das Referenzmesspakt MP* wird um eine Information seiner Ähnlichkeit erweitert, was durch die unterschiedlichen Teilmengen a und b am Ausgang der ersten Vergleichsstufe 90 und der dritten Vergleichsstufe 102 gekennzeichnet ist. Die Teilergebnismenge b beschreibt hier jeweils eine höhere Qualität als die Teilergebnismenge a. Es sollte beachtet werden, dass der zweiten 98 und der dritten Vergleichsstufe 102 jeweils sämtliche Ergebnisse der ersten Vergleichsstufe 90 übergeben werden. Die drei Vergleichsstufen unterscheiden sich durch die Art und Weise ihrer Filtermethoden, wobei die Filterkriterien der ersten Vergleichsstufe 90 deutlich weicher sind. Die erste Vergleichsstufe 90 dient darum eher als Vorstufe für die beiden anderen Vergleichsstufen 98 und 102. Da sich die zweite Vergleichsstufe 98 und die dritte Vergleichsstufe 102 grundsätzlich in ihren Arbeitsweisen unterscheiden, können die jeweiligen Ergebnisse von der jeweils anderen Stufe verifiziert werden. Wenn möglich, werden gemäß Ausführungsbeispielen die Ergebnisse der zweiten Vergleichsstufe 98 weiterverwendet. Prinzipiell wird stets das Ergebnis mit der höchsten Qualität bevorzugt.

Im Nachfolgenden sollen anhand der Fig. 10a - c die Arbeitsweisen der einzelnen Stufen 90, 98 und 102 und die anschließenden Auswertung der Ergebnisse erläutert werden.

Fig. 10a zeigt eine Darstellung eines gesuchten Messpaketes gesMP 92 und eines Messpaketes MP* aus der Referenzmenge 94.

Wie im Vorhergehenden bereits beschrieben wurde, zeichnet sich gemäß Ausführungsbeispielen die erste Vergleichsstufe 90 durch relativ weiche Filterkriterien aus und bildet eine Ergebnismenge EM1, mit der die zweite Vergleichsstufe 98 und die dritte Vergleichsstufe 102 weiterarbeiten können. Dabei umfasst EM1 die beiden Ergebnissmengen EM1a und EM1b. In Fig. 10a sind aus gesMP und MP* nur diejenigen Access-Points dargestellt, deren RSSI-Werte zu den N höchsten des jeweiligen Messpakets zählen. Gemäß Ausführungsbeispielen wird N=5 gewählt. Zudem sind sie entsprechend absteigend sortiert, so dass der Access-Point mit dem höchsten RSSI-Wert am weitesten oben steht. Zur Vereinfachung der Darstellung werden im Folgenden sowohl gesMP als auch MP* auf jeweils fünf Access-Punkte reduziert, wobei natürlich auch jeweils mehr oder weniger Access-Points denkbar sind.

Die Filterung der ersten Vergleichsstufe 90 besteht zunächst darin, dass überprüft wird, wie viele Access-Points aus gesMP in MP* enthalten sind. Um die erste Vergleichsstufe 90 passieren zu können, sollten folgende vier Bedingungen gemäß einem Ausführungsbeispiel der vorliegenden Erfindung erfüllt sein:

1. es sollten mindestens N-1 Access-Points aus gesMP in MP* enthalten sein.

2. der stärkste Access-Point aus gesMP muss unter den stärksten beiden aus MP* sein.

3. Der N.-stärkste Access-Point aus gesMP darf nicht unter den stärksten beiden aus MP* sein.

4. Der zweitstärkste Access-Point aus gesMP muss unter den höchsten N-1 aus MP* sein.

Gelten diese vier Bedingungen als erfüllt, so wird in Abhängigkeit von der Anzahl der in den beiden Messpaketen gesMP und MP* gemeinsam enthaltenen Access-Points das Referenzmesspaket MP* einer der beiden Ergebnismengen EM1a bzw. EM1b zugeordnet. Sind es N Übereinstimmungen, so ist es gemäß Ausführungsbeispielen Ergebnismenge EM1b, andernfalls Ergebnismenge EM1a. Dieses Zuführen zu den unterschiedlichen Ergebnismengen bedeutet, das MP* um die Information seiner Ähnlichkeit zu gesMP erweitert wird.

Die zweite Vergleichsstufe 98 ist neben der dritten Vergleichsstufe 102 eine Stufe mit härteren Filterkriterien im Vergleich zu Stufe 90 und reduziert die von Stufe 90 übergebene Ergebnismenge EM1 auf diejenigen Messpakete, die eine entsprechende Ähnlichkeit bzw. Qualität bezüglich des gesuchten Messpakets gesMP 92 besitzen. Fig. 10a zeigt beispielhaft ein gesuchtes Messpakte gesMP 92 mit fünf Access-Points und ein Referenzmesspaket MP*, welches aus der Ergebnismenge EM1 der ersten Vergleichsstufe 90 stammt. Die Filterung der zweiten Vergleichsstufe 98 basiert auf einem Vergleich der RSSI-Werte der in den beiden Messpaketen gesMP und MP* gemeinsam enthaltenen Access-Points bzw. Funksender. Da, wie im Vorhergehenden bereits beschrieben wurde, die Funksender bereits abfallend nach ihren RSSI-Werten sortiert sind, stellen in Fig. 10b Access-Point AP4 und Access-Point AP6 die stärksten beiden Funksender des gesuchten Messpakets gesMP 92 dar. Dementsprechend werden die Betragsdifferenz $d_1$ aus den RSSI-Werten von AP4 aus gesMP und MP* und die Betragsdifferenz $d_2$ aus den RSSI-Werten von AP6 aus gesMP und MP* doppelt gewichtet, um zu berücksichtigen, dass die RSSI-Werte umso genauer gemessen werden können, je größer sie sind. Dabei bedeuten hier $d_x$ die Beträge der Differenzen zwischen den RSSI-Werten der jeweiligen Funksender aus gesMP und MP* wobei x = 1, ..., 5, wobei für x die Stärke des Funksenders in gesMP maßgebend ist. Die oben beschriebene Gewichtung ist relevant für die Ermittlung von $d_m$, dem Mittelwert der Betragsdifferenzen $d_x$. Werden, wie in Fig. 10b dargestellt, in der ersten Vergleichsstufe 90 nur vier Übereinstimmungen festgestellt, so wird $d_m$ beispielsweise mittels

$$d_m = \frac{2d_1 + 2d_2 + d_3 + d_4}{6}, \qquad (2)$$

andernfalls beispielsweise mittels

$$d_m = \frac{2d_1 + 2d_2 + d_3 + d_4 + d_5}{7} \qquad (3)$$

bestimmt. Natürlich sind hier auch andere Formen der Gewichtungen der Betragsdifferenzen $d_x$ für die Bildung des Mittelwerts $d_m$ denkbar. Eine Standardabweichung σ der Beträge der Differenzen $d_x$ zwischen den RSSI-Werten der jeweiligen Funksender zu ihrem Mittelwert $d_m$ ergibt sich damit aus

$$\sigma = \sqrt{\frac{1}{N-1}\sum_{x=1}^{N}\left(d_x - d_m\right)^2} \qquad , \qquad (4)$$

wobei N die Anzahl der Übereinstimmungen zwischen gesMP und MP* bedeutet. Bleibt σ unter einem bestimmten Grenzwert, so hat MP* eine nach der zweiten Vergleichsstufe 98 verlangte Ähnlichkeit zu gesMP und wird der Ergebnismenge EM2 der zweiten Vergleichstufe 98 zugeteilt.

Die Einrichtung zum Vergleichen weist also eine zweite Vergleichsstufe 98 auf, die ausgebildet ist, um mit der Ergebnismenge der ersten Vergleichsstufe 90 eine Standardabweichung σ zwischen den Ergebnissen der Ergebnismenge und des gesuchten Messpakets gemäß Gl. (4) zu ermitteln, wobei $d_x$ einen Betrag der Differenz zwischen RSSI-Werten zweier identischer ortsfester Funksender aus dem gesuchten Messpaket gesMP und einem Referenzmesspaket MP* aus der Ergebnismenge EM1 der ersten Vergleichstufe bedeutet und $d_m$ einen Mittelwert der Differenzen $d_x$ bedeutet.

Fig. 10c zeigt eine Ausgangssituation für die dritte Vergleichsstufe 102. Diese Ausgangssituation stellt sich für die dritte Stufe 102 genauso dar wie für die zweite Vergleichsstufe 98, was bedeutet, dass MP* aus der Ergebnismenge EM1 der ersten Vergleichsstufe 90 ist und dass gesMP und MP* jeweils absteigend nach den RSSI-Werten der in dem Messpaketen enthaltenen Funksender sortiert ist, und dass mindestens vier Funksender aus gesMP auch in MP* enthalten sind. Die dritte Vergleichsstufe 102 basiert ähnlich wie die erste Vergleichsstufe 90 auf einer Auswertung bestimmter Relationen zwischen den Funksendern bezüglich ihrer Positionen des jeweiligen Messpakets, wobei hier nach härteren Kriterien verglichen wird. Prinzipiell lässt sich sagen, dass hier überprüft wird, ob die Position eines Funksenders aus gesMP der Position des Funksenders in MP* entspricht. Sind, wie in Fig. 10c zu sehen, beispielsweise drei Übereinstimmungen enthalten, ist eine geforderte Ähnlichkeit zwischen den Messpaketen der Stufe vorhanden. Bestehen beispielsweise vier oder fünf Übereinstimmungen, so wird dies noch zusätzlich unterschieden. Die Anzahl der Übereinstimmungen entscheidet grundsätzlich darüber, ob ein Ergebnis der Ergebnismenge EM3a (beispielsweise drei Übereinstimmungen) oder EM3b (größer als drei Übereinstimmungen) zugeteilt wird.

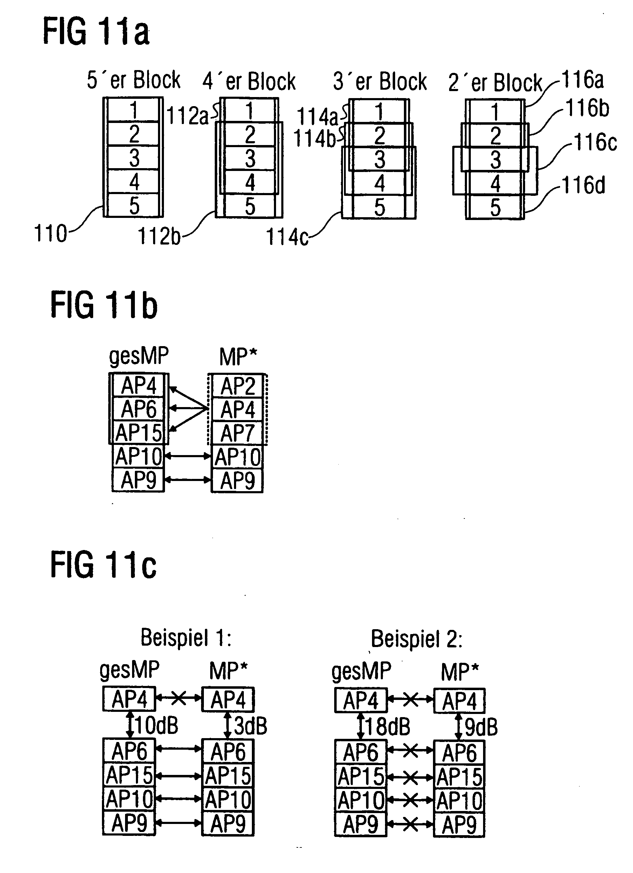

Im Allgemeinen kann diese Vorgehensweise jedoch dann Schwächen aufzeigen, wenn an Positionen innerhalb eines Funknetzes die von einem Client empfangenen RSSI-Werte $RSSI_k(i)$ der entsprechenden Funksender ähnlich hoch sind. Grundsätzlich kann festgestellt werden, dass, je kleiner eine Differenz zwischen zwei RSSI-Werten ist, desto geringer ist auch eine Wertigkeit einer wie hier überprüften Relation zwischen zwei Funksendern anzusetzen. Um dem entgegenzuwirken, werden gemäß Ausführungsbeispielen bei zu geringen Differenzen der RSSI-Werte innerhalb von gesMP Blöcke gebildet, die anschließend gesondert behandelt werden. Diese Vorgehensweise ist in Fig. 11a veranschaulicht.

Die in Fig. 11a gezeigten Blöcke beziehen sich lediglich auf gesMP. Die in den jeweiligen Blöcken gezeigten Nummern 1 bis 5 stellen die Rang-Positionen der Funksender bzgl. ihrer RSSI-Werte dar. Die maximale Differenz der RSSI-Werte zwischen dem jeweils ersten und dem jeweils letzten eines Blockes entspricht gemäß Ausführungsbeispielen 1,7 dB. Der Wert für die maximale Differenz der RSSI-Werte zwischen dem jeweils ersten und dem jeweils letzten eines Blockes, welcher vorzugsweise zu wählen ist, ist im Wesentlichen von Eigenschaften der verwendeten Technologie abhängig. Kann, wie durch Bezugszeichen 110 angedeutet, ein Fünferblock oder ein Viererblock (112a, 112b) in gesMP ermittelt werden, so bleibt die dritte Vergleichsstufe 102 für das entsprechende gesuchte Messpaket gesMP gesperrt, da hier eine weitere Differenzierung keine merkliche Verbesserung gegenüber der ersten Vergleichsstufe 90 bringen würde. Diese beiden Fälle setzten prinzipiell eine sehr hohe Funksenderdichte voraus und werden daher eher selten detektiert werden.

Des Weiteren wird die dritte Vergleichsstufe 102 gemäß Ausführungsbeispielen der vorliegenden Erfindung für ein gesuchtes Messpaket gesMP gesperrt, sollten sich die RSSI-Werte des Funksenders auf Position 1 und des Funksenders auf Position 4 in gesMP gemäß Ausführungsbeispielen nicht um mehr als 8 dB unterscheiden. Auch hier ist die Erfindung nicht auf diesen Wert beschränkt, da dieser Wert abhängig von Gegebenheiten, wie beispielsweise einer verwendeten Funknetztechnologie, gewählt werden kann.

Wird ein Dreierblock (114a, 114b, 114c) festgestellt, wird gemäß Ausführungsbeispielen nur noch gefordert, dass ein bestimmter Funksender aus MP* Teil des Blocks in gesMP ist, sollte dieser Funksender an einer Position innerhalb von MP* liegen, welche positionsmäßig durch diesen Block eingegrenzt ist. Diese Vorgehensweise soll anhand von Fig. 11b näher erläutert werden.

Mittels der Blockbildung konnten in dem in Fig. 11b dargestellten Beispiel AP4, AP6 und AP15 zu einer Dreierblock zusammengefasst werden. AP4 aus MP* darf innerhalb von gesMP folglich entweder erster, zweiter oder dritter sein. Gleiches gilt für AP2 bzw. AP7. Bei einem Zweierblock wird genauso verfahren wie bei einem Dreierblock.

Eine weitere kennzeichnende Relation zwischen zwei RSSI-wertmäßig übereinander liegenden Funksendern ist eine relativ große Differenz der RSSI-Werte. So kann eine bereits festgestellte Übereinstimmung gemäß Ausführungsbeispielen wieder entwertet werden, falls sich diese Differenz aus gesMP nicht in ähnlicher Größe in MP* spiegelt. Dieser Sachverhalt ist zu näheren Erläuterung in Fig. 11c dargestellt.

Damit diese Relation zwischen zwei RSSI-wertmäßig übereinander liegenden Funksender ausgewertet wird, sollten sich in gesMP zwei benachbarte Funksender gemäß Ausführungsbeispielen um mindestens 8 dB unterscheiden. Sollte dies der Fall sein, dann sollte zwischen den gleichen beiden Funksendern in MP* deren Differenz gemäß Ausführungsbeispielen vorzugsweise mindestens zwei Drittel der Differenz aus gesMP betragen. Diese Situation ist in Fig. 11c im linken Teilbild dargestellt. Nachdem sich AP4 und AP6 aus gesMP um 10 dB unterscheiden, liegen diese beiden Funksender in MP* um mindestens 10 dB · 3/2 = 6,6 dB auseinander. Da dies in dem in Fig. 11C gezeigten Beispiel nicht der Fall ist, wird eine der bereits fünf Übereinstimmungen wieder gestrichen. Sind, wie im rechten Teilbild von Fig. 11c zu sehen, zwei Funksender aus gesMP um mehr als 12 dB voneinander entfernt, so wird bei Nichterreichen der geforderten Distanz in MP* die dritte Vergleichsstufe 102 für dieses gesuchte Messpaket gesMP 92 gesperrt.

Die Genauigkeit der zweiten Vergleichsstufe 98 kann von der dritten Vergleichsstufe 102 im Allgemeinen nicht erreicht werden. Jedoch liefert die dritte Vergleichsstufe 102 bei einer Verschlechterung von Randbedingungen, vor allem bei einer Verwendung zweier unterschiedlicher Funkkarten, weiterhin gute Ergebnisse.

Bei einer Auswertung der bisher durch die Vergleichsstufen 92, 98 und 102 ermittelten Ergebnismengen, werden die bisher ermittelten Ergebnismengen differenzierter betrachtet um eine Sicherheit der Ergebnisse zu erhöhen. Diese Unterscheidung wird hauptsächlich über die Größen der einzelnen Mengen gemacht und begründet sich darin, dass ein Ergebnis, sei es auch von einer höheren Qualität, mit einer gewissen Unsicherheit behaftet ist, sollte es nicht durch weitere Ergebnisse gleicher Qualität bestätigt werden. Dazu werden die bis hierhin verwendeten Mengen zunächst umgruppiert und entsprechend benannt.

| EM2: | Ergebnismenge der zweiten Vergleichsstufe 98 |
|---|---|
| EM3b: | die besseren Ergebnisse der dritten Vergleichsstufe 102 |
| EM3: | alle Ergebnisse aus der Ergebnismenge der dritten Vergleichsstufe 102 |
| EM1b: | die besseren Ergebnisse aus der Ergebnismenge der ersten Vergleichsstufe 90 |
| EM1: | alle Ergebnisse aus der Ergebnismenge der ersten Vergleichsstufe 90 |
| EM1b3b: | alle Ergebnisse aus der Schnittmenge von EM1b und EM3b |
| EM1b3: | alle Ergebnisse aus der Schnittmenge von EM1b und EM3 |
| EM+: | Ergebnismenge nach der Auswertung für höherwertige Ergebnisse |
| EM-: | Ergebnismenge nach der Auswertung für minderwertige Ergebnisse |
| EM: | resultierende Ergebnismenge nach der Auswertung. |

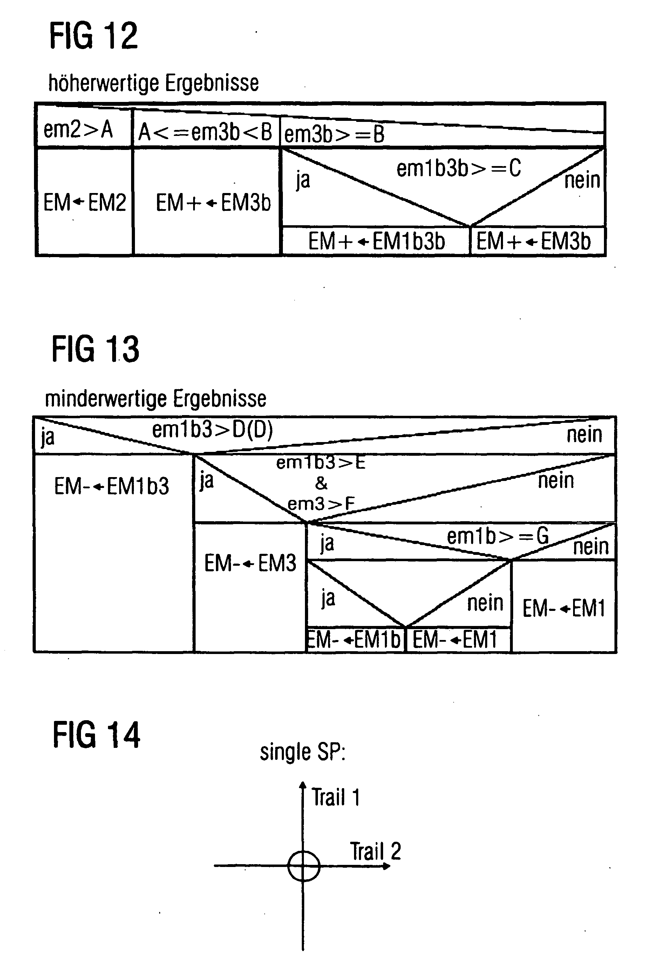

Die Schnittmengen aus EM1b und EM3b bzw. EM1b und EM3 werden ausgewertet, damit beispielsweise eine mögliche große Menge EM3b durch zusätzliche Informationen aus der ersten Vergleichsstufe 90 weiter reduziert und damit das Ergebnis verbessert werden kann. Um die Nachfolgenden anhand der Fig. 12 und 13 dargestellten Struktogramme möglichst übersichtlich zu halten, wird die Anzahl der Elemente der einzelnen Mengen genauso benannt wie die Menge selbst nur entsprechend kleingeschrieben.

Fig. 12 zeigt ein Struktogramm zur Auswertung höherwertiger Ergebnisse, falls diese vorhanden sind.

Bei der in Fig. 12 durch das Struktogramm dargestellte Auswertung der höherwertigen Ergebnisse wird bei dem Schritt des Vergleichens der ermittelten Eigenschaften mit vorher aufgezeichneten Eigenschaften eine Auswertungsergebnismenge EM basierend auf Ergebnissen EM2 der zweiten Vergleichsstufe 98 gebildet, falls der Umfang em2 der Ergebnismenge EM2 der zweiten Vergleichsstufe 98 größer als ein vorbestimmter Wert A ist. D.h. die Einrichtung zum Vergleichen ist ausgebildet, um die Auswertungsergebnismenge EM basierend auf Ergebnissen EM2 der zweiten Vergleichsstufe zu bilden, falls der Umfang em2 der Ergebnismenge der zweiten Vergleichsstufe 98 größer als A ist. Gemäß Ausführungsbeispielen ist A gleich 3.

Ferner wird bei dem Schritt des Vergleichens die höherwertige Ergebnismenge EM+ basierend auf besseren Ergebnissen EM3b der dritten Vergleichsstufe 102 gebildet, falls der Umfang em3b der Menge EM3b der besseren Ergebnisse der dritten Vergleichsstufe 102 zwischen A und einem oberen Wert B > A liegt. D.h. die Einrichtung zum Vergleichen ist ausgebildet, um eine höherwertige Ergebnismenge EM+ basierend auf einer besseren Ergebnismenge EM3b der dritten Vergleichsstufe 102 zu bilden, falls der Umfang em3b der besseren Ergebnismenge EM3b der dritten Vergleichsstufe 102 größer oder gleich A und keiner B ist, wobei A < B. Gemäß Ausführungsbeispielen der vorliegenden Erfindung ist B = 15, d.h. 3 <= em3b < 15.

Ist der Umfang em3b der Ergebnismenge EM3b der dritten Vergleichsstufe größer oder gleich B und ist der Umfang em1b3b der Schnittmenge der besseren Ergebnisse EM1b der ersten Vergleichsstufe 90 mit den besseren Ergebnissen EM3b der dritten Vergleichsstufe 102 größer oder gleich einem vorbestimmten Wert C, wobei gemäß Ausführungsbeispielen C=2, so ergibt sich die resultierende Ergebnismenge EM+ aus EM1b3b. D.h. die Einrichtung zum Vergleichen ist ausgebildet, um die höherwertige Ergebnismenge EM+ basierend auf der Schnittmenge EM1b3 der Menge der besseren Ergebnisse EM3b der dritten Vergleichsstufe 102 und der Menge der besseren Ergebnisse EM1b der ersten Vergleichsstufe zu bilden, falls der Umfang em3b der Menge der besseren Ergebnisse EM3b der dritten Vergleichsstufe größer oder gleich B ist und ein Umfang der Schnittmenge EM1b3 kleiner als C ist. Ferner ist die Einrichtung zum Vergleichen ausgebildet, um die höherwertige Ergebnismenge EM+ basierend auf der Menge der besseren Ergebnisse EM3b der dritten Vergleichsstufe 102 zu bilden, falls der Umfang em3b der Menge der besseren Ergebnisse EM3b der dritten Vergleichsstufe 102 größer gleich B ist und der Umfang em1b3b der Schnittmenge EM1b3b der besseren Ergebnisse (M3b)der dritten Vergleichsstufe 102 und der besseren Ergebnisse EM1b der ersten Vergleichsstufe 90 kleiner als C ist. Ist der Umfang em3b der Ergebnismenge EM3b größer gleich B = 15 und der Umfang em1b3b < C=2, so ergibt sich gemäß Ausführungsbeispielen die resultierende Ergebnismenge EM+ also aus der Ergebnismenge EM3b.

Um, vor allem bei schlechten Randbedingungen, noch akzeptable Informationen zu bekommen, werden auch die minderwertigen Ergebnisse der ersten Vergleichsstufe 90 bzw. der dritten Vergleichsstufe 102 entsprechend genau untersucht. Der Weg zu der Ergebnismenge EM- nach Auswertung der minderwertigen Ergebnisse ist in dem Struktogramm in Fig. 13 gezeigt.

Die Ergebnismenge EM-, nach der Auswertung für minderwertige Ergebnisse, entspricht der Schnittmenge EM1b3 der besseren Ergebnisse EM1b aus der ersten Vergleichsstufe 90 mit allen Ergebnissen EM3 aus der Ergebnismenge der dritten Vergleichsstufe 102, wenn der Umfang der Schnittmenge em1b3 größer als ein vorbestimmter Wert D ist. D.h. die Einrichtung zum Vergleichen ist ausgebildet, um die minderwertige Ergebnismenge EM- basierend auf der Schnittmenge EM1b3 der Ergebnismenge EM3 der dritten Vergleichsstufe 102 und der Menge der besseren Ergebnisse EM1b der ersten Vergleichsstufe 90 zu bilden, falls der Umfang em1b3 dieser Schnittmenge EM1b3 größer als D ist und kein höherwertiges Ergebnis bestimmt werden konnte. Gemäß Ausführungsbeispielen ist D = 5.

Ist em1b3 > E (z.B. E=2), aber em1b3 ≤ D und ist em3 > F (z.B. F=5), so ergibt sich die Ergebnismenge für minderwertige Ergebnisse aus der Ergebnismenge EM3. D.h. die Einrichtung zum Vergleichen ist ausgebildet, um die minderwertige Ergebnismenge EM- basierend auf der Ergebnismenge EM3 der dritten Vergleichsstufe 102 zu bilden, falls der Umfang der Schnittmenge EM1b3 der Ergebnismenge EM3 der dritten Vergleichsstufe 102 und der besseren Ergebnisse EM1b der ersten Vergleichsstufe 90 größer als E und kleiner als D ist und der Umfang em3 der Ergebnismenge EM3 der dritten Vergleichsstufe 102 größer als F ist.

Ist die Bedingung em1b3 > E und em3 > F nicht erfüllt, so wird der Umfang em1b der Menge der besseren Ergebnisse EM1b der ersten Vergleichsstufe 90 betrachtet. Ist em1b ≥ G, wobei gemäß Ausführungsbeispielen G = 5, und zusätzlich em1b > 3*em3 so ergibt sich die Ergebnismenge EM- für minderwertige Ergebnisse aus EM1b, d.h. der Ergebnismenge der besseren Ergebnisse EM1b der ersten Vergleichsstufe 90. D.h. die Einrichtung zum Vergleichen ist ausgebildet, um die minderwertige Ergebnismenge EM- basierend auf den besseren Ergebnissen EM1b der ersten Vergleichsstufe 90 zu bilden, falls die Bedingung, dass der Umfang der Schnittmenge EM1b3 der Ergebnismenge EM3 der dritten Vergleichsstufe 102 und der besseren Ergebnisse EM1b der ersten Vergleichsstufe 90 größer als E und kleiner als D ist und der Umfang em3 der Ergebnismenge EM3 der dritten Vergleichsstufe 102 größer als F ist, nicht erfüllt ist, und der Umfang em1b der Menge der besseren Ergebnisse EM1b der ersten Vergleichsstufe 90 größer oder gleich G ist und der Umfang em1b der Menge der besseren Ergebnisse EM1b der ersten Vergleichsstufe 90 größer als 3*em3 ist.

Ist em1b ≥ G aber em1b ≤ 3*EM3, so ergibt sich EM- aus EM1. Ist hingegen em1b < G, so ergibt sich EM- ebenfalls aus EM1.

Die hier beschriebenen Werte für A, B, C, D, E, F und G sind natürlich nicht als Einschränkung anzusehen. Vielmehr sollten diese Werte an Gegebenheiten, wie z.B. verwendete Funktechnologien, angepasst werden.

Sollte nach den anhand der Fig. 12 und 13 beschriebenen Auswertungen die Ergebnismenge EM keine Elemente enthalten, so wird die Ergebnismenge EM aus der Ergebnismenge EM+ nach der Auswertung für höherwertige Ergebnisse gebildet. Für den Fall, dass sowohl EM und EM+ beide keine Elemente enthalten, wird die Ergebnismenge EM aus der Ergebnismenge EM- nach der Auswertung für minderwertige Ergebnisse gebildet. Falls keine der drei Ergebnismengen EM, EM+ und EM-Elemente enthalten, konnte der bereits im Vorhergehenden beschriebene SP-Algorithmus kein Ergebnis ermitteln.

Für alle Ergebnismengen EM, EM+ und EM- wird jeweils der Mittelwert der Messungsnummern der enthaltenen Referenzpakete MP* gebildet. Diese Mittelwerte werden als $EM_m$, $EM+_m$ und $EM-_m$ benannt. Bei der Mittelwertbildung wird zusätzlich bei der Berechnung die Qualität der Ergebnisse berücksichtigt. So wird ein gutes Ergebnis beispielsweise mit dem Faktor 10, ein normales Ergebnis beispielsweise mit dem Faktor 20 und ein schlechtes Ergebnis beispielsweise mit dem Faktor 1 gewichtet, wobei ein gutes Ergebnis entweder einem Ergebnis aus EM2 oder aus EM3b, ein normales Ergebnis einem Ergebnis aus EM1b oder EM3 und ein schlechtes Ergebnis einem Ergebnis aus EM1 entspricht. Andere Faktoren, als die hier beispielhaft erwähnten Gewichtungsfaktoren sind ebenfalls denkbar. Ein schlechtes Ergebnis kann ferner folgendermaßen entstehen: konnten sowohl der Ergebnismenge EM als auch der Ergebnismenge EM+ Werte zugeteilt werden, so wird zunächst der Betrag der Differenz zwischen $EM_m$ und $EM+_m$ bestimmt. Ist dieser Betrag größer als beispielsweise 30, so wird dieses Ergebnis entwertet und den schlechten Ergebnissen zugeteilt.

Die im Nachfolgenden vorgestellten Methoden befassen sich damit, wie anhand bestimmter Muster in der im Vorhergehenden beschriebenen Schnittpunktsuche auf gewisse Bewegungsabläufe von zwei Endgeräten innerhalb eines Funk-Netzes, beispielsweise eines WLAN-Netzes, geschlossen werden kann. Mit den daraus neu gewonnenen Informationen kann zum Einen eine Genauigkeit der Schnittpunktsuche weiter erhöht werden und zum Anderen kann eine bessere Grundlage für eine nachfolgende Routenplanung bzw. Wegberechnung zur Zusammenführung der beiden Clients geschaffen werden.

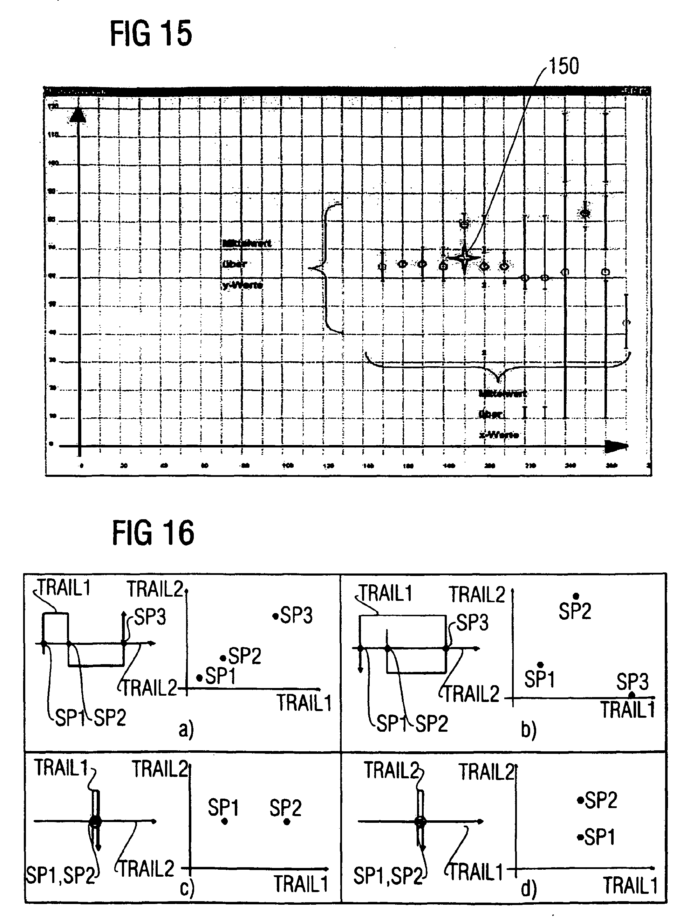

Ein Bewegungsablauf, bei dem sich beide Wege der Clients nur in einem Punkt schneiden ist exemplarisch in Fig. 14 gezeigt. Die im Vorhergehenden angesprochene Reduzierung der Ergebnismenge auf ein einziges Ergebnis wird durch Mittelwertbildung der jeweiligen Messungsnummern aus Trail 1 (x-Werte) und Trail 2 (y-Werte) erreicht. Der Algorithmus, der dies erledigt, berücksichtigt bei der Berechnung zusätzlich die im Vorhergehenden bereits angesprochene Qualität der Ergebnisse. So wird ein gutes Ergebnis beispielsweise mit dem Faktor 10 ein normales Ergebnis beispielsweise mit dem Faktor 2 und ein schlechtes Ergebnis beispielsweise mit dem Faktor 1 gewichtet. Dieser Sachverhalt ist in Fig. 15 gezeigt.

Der mit dem Bezugszeichen 150 gekennzeichnete Stern in Fig. 15 symbolisiert diesen, gemäß obiger Vorschrift berechneten Ersatzwert, für den in diesem Beispiel x = 190 und y = 67 errechnet wurde. Die Qualität dieses Wertes ist abhängig von der Qualität der Ergebnisse, über die gemittelt wurde. So ist es ausreichend, wenn ein Einziges eine höhere Qualität hat als die anderen, um den Ersatzwert 150 entsprechend einzustufen. Die Koordinaten x = 190 und y = 67 bedeuten hier, dass das Messpaket 190 des Trails 1 am besten mit dem Messpaket mit der Messungsnummer 67 des Trails 2 korrespondiert. Da die Geschwindigkeiten der Clients A und B zumindest näherungsweise als konstant angesehen werden können, kann mit den Geschwindigkeiten und den entsprechenden Messungsnummern ein Ort bestimmt werden.

Fig. 15 spiegelt ein Bewegungsmuster wider, bei dem sich die beiden Trails Trail 1 und Trail 2 nur in einem einzigen Punkt schneiden. In Fig. 16 sind im Gegensatz dazu verschiedene Bewegungsmuster dargestellt, bei denen sich die beiden Trails (Trail 1 und Trail 2) in mehreren Punkten schneiden. Zusätzlich sind die zu erwartenden Schnittpunkte in einem Koordinatensystem skizziert.

Fig. 16a zeigt einen Referenzweg 1 bzw. Trail 1 und einen Referenzweg 2 bzw. Trail 2, die sich in drei Schnittpunkten SP1, SP2 und SP3 schneiden. Der erste Schnittpunkt SP1 liegt relativ nahe am Start der beiden Wege Trail 1 und Trail 2, weshalb er in dem in Fig. 16a gezeigten Koordinatensystem auch relativ nahe am Koordinatenursprung liegt. Die Schnittpunkte SP2 und SP3 liegen jeweils auf beiden Trails weiter vom jeweiligen Startpunkt des Trails entfernt und somit auch weiter weg vom Koordinatenursprung. Anders sieht es hingegen in Fig. 16b aus. Auch hier schneiden sich zwei Wege, Trail 1 und Trail 2, in drei Schnittpunkten SP1

- SP3. Der Schnittpunkt SP1 befindet sich zeitlich am nächsten zum Start von jeweils Trail 1 und Trail 2, weswegen er auch am nächsten zum Koordinatenursprung des zugehörigen Koordinatensystems zu finden ist. Der Schnittpunkt SP2 liegt aus der Sicht von Trail 2 schon ziemlich an dessen Endpunkt, aus der Sicht von Trail 1 jedoch ca. in dessen Wegmitte, weswegen er im Koordinatensystem relativ weit "oben" zu finden ist. Der Schnittpunkt SP3 befindet sich aus der Sicht von Trail 2 an dessen Weganfang und aus der Sicht von Trail 1 an dessen Wegende, weshalb er an dem Koordinatensystem rechts unten zu finden ist.

In Teilbildfigur 16c ist dargestellt, dass sich beide Trails zweimal im gleichen Punkt schneiden. Ähnlich verhält es sich in Teilbildfigur 16d, wobei hier jedoch Trail 1 und Trail 2 vertauscht sind, so dass die beiden Schnittpunkte SP1 und SP2 übereinander statt nebeneinander liegen.

Um für das in Fig. 16c dargestellte Szenario für jeden Schnittpunkt die jeweilige Menge an Ergebnissen entsprechend Fig. 15 mitteln zu können, wird die gesamte Schnittpunktmenge vorteilhaft in zwei Teilmengen getrennt. Dieser Vorgang wird als so genanntes "Horizontal-Clustern" bezeichnet. Die Bedingung hierfür ist ein Mindestabstand $\Delta x_{min}$ zwischen den x-Werten von zwei benachbarten Ergebnissen. Gemäß Ausführungsbeispielen beträgt der Mindestabstand $\Delta x_{min} = 90$. Als benachbart gelten zwei Ergebnisse, wenn sie zeitlich gesehen nacheinander ermittelt wurden. Für die in den Fig. 16a und Fig. 16b dargestellten Szenarien müssten jeweils drei dieser Horizontal-Cluster gebildet werden. Das in Fig. 16c dargestellte Bewegungsmuster verlangt zusätzlich, dass durch das Horizontal-Clustern entstandene Teilmengen noch weiter unterteilt werden. Dies wird als "Vertikal-Clustern" bezeichnet. Dazu kann gemäß Ausführungsbeispielen die Ergebnismenge eines Horizontal-Clusters an einen bestimmten Algorithmus übergeben werden. Dessen Arbeitsweise kann wiederum auf der Detektion eines größeren Abstandes basieren, wobei gemäß Ausführungsbeispielen der geforderte Abstand zwischen zwei y-Werten $\Delta y > 100$ ist.

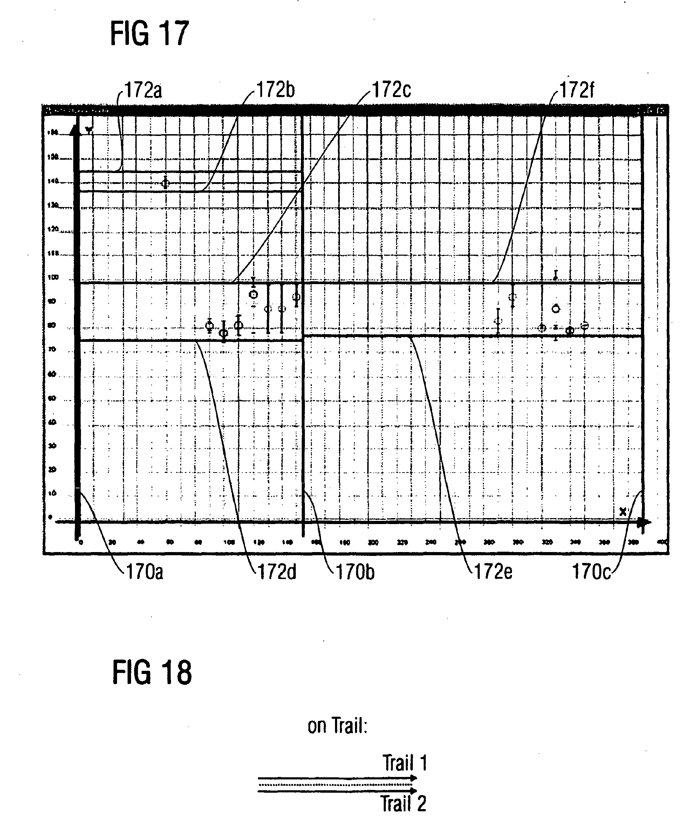

Fig. 17 stellt Horizontal-Cluster und Vertikal-Cluster des Bewegungsmusters von Fig. 16c dar. In Fig. 17 sind sowohl die Grenzen der Horizontal-Cluster 170a bis C als auch die Grenzen der Vertikal-Cluster 172 zu sehen. Das Cluster oben links wird bei diesem Beispiel noch herausgefiltert, da es sich in einer gewissen Nähe zu einem benachbarten Cluster (links Mitte) mit gutem Ergebnis befindet.

Eine Reduzierung auf einen Ersatzwert mit Methoden bei einem "Single-SP-Szenario" bei einer tatsächlich vorliegenden "On-Trail"-Situation ist auszuschließen. Daher werden gemäß Ausführungsbeispielen diese beiden Fälle zunächst unterschieden. Um das Szenario "Single-SP" zu detektieren, wird eine Standardabweichung zum Mittelwert der y-Werte $y_i$ aller N Ergebnisse des jeweiligen Vertikal-Clusters errechnet und in Abhängigkeit davon entschieden. Gemäß Ausführungsbeispielen kann die Standardabweichung $\sigma$ folgendermaßen bestimmt werden.

$$y_m = \frac{1}{N} \sum_{i=1}^{N} y_i \qquad (5)$$

$$\sigma = \sqrt{\frac{1}{N-1} \sum_{i=1}^{N} (y_i - y_m)^2} \qquad (6)$$

Eine Detektion der "On-Trail"-Situation wird nur dann durchgeführt, wenn keine "Single-SP"-Situation festgestellt werden konnte und wird im Nachfolgenden noch beschrieben. Wird keiner der beiden Fälle festgestellt, so werden alle Ergebnisse der Schnittpunkt-Suche an eine nachfolgende Routenplanung weitergegeben.

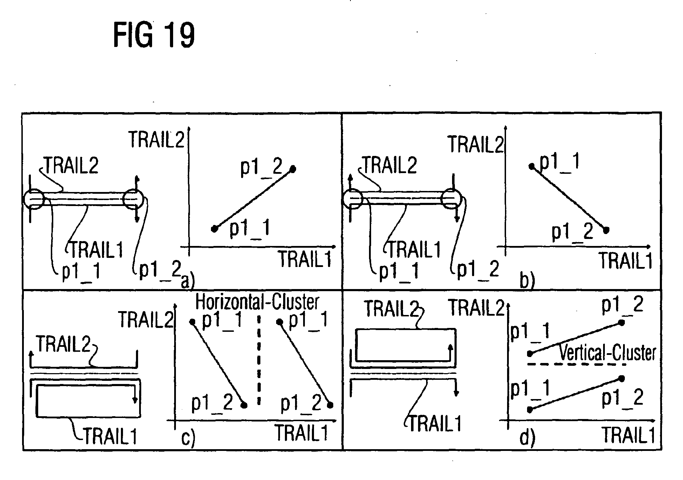

Eine "On-Trail"-Situation ist schematisch in Fig. 18 gezeigt. Wie zuvor schon erläutert beschreibt dieser Fall ein Bewegungsmuster bei dem die beiden Clients in ihrer Vergangenheit ganze Wegstücke gleich oder entgegengesetzt abgelaufen sind. Da es in diesem Zusammenhang wiederum unterschiedliche Bilder bzw. Szenarien in dem Koordinatensystem gibt, müssen diese ebenfalls differenziert betrachtet werden, um gewünschte Ausgleichsgeraden ermitteln zu können. Die wichtigsten Bewegungsmuster sind in nachfolgender Figur 19 beispielhaft zusammengestellt.

Fig. 19a beschreibt ein Szenario in dem ein erster Client auf einem Trail 1 ein Teil eines Wegstücks eines zweiten Clients mit Trail 2 in gleiche Richtung abgelaufen ist, wobei der Punkt p1_1 den Punkt markiert, an dem die beiden Trails zusammengeführt werden und der Punkt p1_2 denjenigen Punkt markiert, an dem die beiden Trails wieder auseinander laufen.

Fig. 19b beschreibt ein ähnliches Szenario, nur hier werden die beiden Trails jeweils entgegengesetzt abgelaufen. Dadurch markiert hier der Punkt p1_1 einen Punkt, der sich relativ am Anfang von Trail 1, jedoch relativ am Ende von Trail 2 befindet. Umgekehrt verhält es sich für Punkt p1_2, der sich relativ weit am Ende von Trail 1 und relativ weit am Anfang von Trail 2 befindet.

Fig. 19c beschreibt ein Szenario, bei dem Trail 1 und Trail 2 wiederum gegensinnig durchlaufen werden und Trail 1 zusätzlich noch eine Schleife aufweist. Dadurch entsteht die bereits anhand von Fig. 19b beschriebene abfallende Gerade rechts von der Geraden ein zweites Mal, sowie es im Koordinatensystem von Fig. 19c zu erkennen ist.

Fig. 19d beschreibt das Szenario von Fig. 19a mit dem Unterschied, dass hier Trail 2 eine Schleife enthält, so dass die bereits anhand von Fig. 19a beschriebene steigende Gerade überhalb der Gerade noch einmal auftaucht, so wie es in Fig. 19d gezeigt ist.

In Fig. 19a werden beide Trails in gleiche Richtung abgelaufen, was zur Folge hat, dass die Ergebnismenge idealisiert eine ansteigende Gerade im Koordinatensystem beschreibt. Im Gegensatz dazu entspricht, bei gegensinnigem Ablaufen der Trails, die Ergebnismenge eine fallenden Gerade (siehe Fig. 19b). In Fig. 19c ist zu sehen, dass Trail 1 eine Schleife enthält, was auch für Fig. 19d gilt, nur dass sich hier die Schleife in Trail 2 befindet. Da hier in einem Cluster nur eine steigende oder eine fallende Gerade ist, kann bei der Detektion der oben dargestellten "On-Trail"-Situationen nach ähnlichen Kriterien ausgewertet werden. Dazu werden die Punkte bzw. Marken p1_1 und p1_2 verwendet. Auf das von links erste gute Ergebnis wird die Marke p1_1 gesetzt und auf das von rechts erste gute Ergebnis wird die Marke p1_2 gesetzt. Bestimmte Relationen zwischen p1_1 und p1_2 in ihren x- und y-Werten entscheiden unter Anderem darüber, ob eines der in Fig. 19 dargestellten einfacheren oder ein komplizierteres Muster vorliegt. Handelt es sich um ein einfaches Muster, wird zunächst überprüft, wie gut sich die jeweilige Ergebnismenge einer Geraden annähern würde. Dies kann gemäß Ausführungsbeispielen mit einer Rechnung eines Korrelationskoeffizienten gemäß

$$r = \sqrt{\frac{\sum_{i=1}^{n} x_i y_i - n\overline{x}\overline{y}}{\left(\sum_{i=1}^{n} x_i^2 - n \cdot \overline{x}^2\right)\left(\sum_{i=1}^{n} y_i^2 - n\overline{y}^2\right)}} \qquad\qquad (7)$$

erreicht werden, wobei in Gl. (7) y den y-Wert eines Ergebnisses, x den x-Wert eines Ergebnisses, $\overline{x}$ einen Mittelwert über alle n x-Werte und $\overline{y}$ einen Mittelwert über alle n y-Werte bezeichnen. Grundvoraussetzung hierfür und für die im Nachfolgenden beschriebenen Gleichungen zur Bestimmung einer Ausgleichsgeraden ist, dass mindestens drei Ergebnisse vorliegen müssen. Weiterhin gilt, dass sämtliche schlechte Ergebnisse in einem Cluster entfernt werden, wenn sich beispielsweise mehr als fünf gute Ergebnisse in dem Cluster befinden.

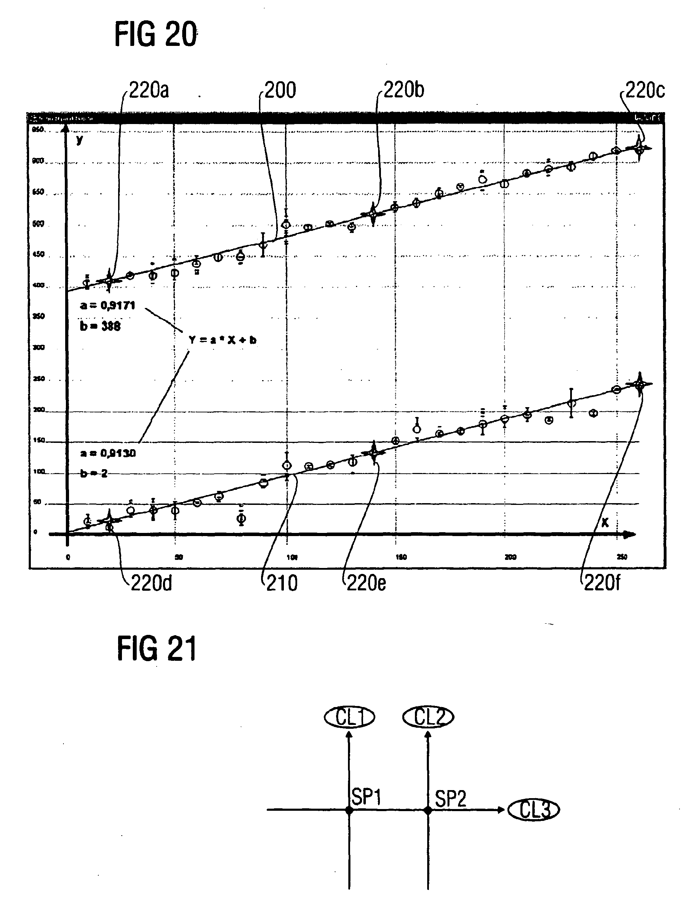

Die n Messpunkte liegen immer dann nahezu auf einer Geraden, wenn der Korrelationskoeffizient r sich nur wenig von -1 oder 1 unterscheidet. Im Falle |r| = 1 liegen die Messpunkte exakt auf einer Geraden. Dieser Zusammenhang ist in Fig. 20 näher erläutert.

Fig. 20 zeigt eine obere Ausgleichsgerade 200 und eine untere Ausgleichsgerade 210. Der Korrelationskoeffizient r weist bei der oberen Geraden 200 einen Wert von 0,99 auf und bei der unteren Geraden eine Wert von 0,98.

Mittels der vier nachfolgenden Gleichungen (8) bis (11), die auf dem Gauß'schen Prinzip der kleinsten Quadrate basieren, werden aus den x- und y-Werten der Ergebnismenge zunächst Parameter a (Steigung) und b (Ordinatenschnittpunkt) einer Ausgleichsgeraden errechnet, um anschließend drei Ersatz-Ergebnisse zu ermitteln, welche in Fig. 20 beispielhaft als Sterne 220a - f markiert sind. Diese liegen jeweils am Anfang, in der Mitte und am Ende der Ergebnismenge, wobei die x-Werte der Marken p1_1 und p1_2 als Grundlage für Anfang und Ende verwendet werden. Gemäß Ausführungsbeispielen werden nur die guten Ergebnisse berücksichtigt, um bei einem Eintritt bzw. bei einem Austritt aus einer On-Trail-Situation einen möglichst scharfen und genauen Übergang zu erhalten. Die Qualität wird für jedes Ersatzergebnis gemäß Ausführungsbeispielen mit "gut" eingestuft.

$$\Delta = n \cdot \sum_{i=1}^{n} x_i^2 - \left( \sum_{i=1}^{n} x_i \right)^2 \qquad (8)$$

$$a = \frac{n \cdot \sum_{i=1}^{n} x_i y_i - \left( \sum_{i=1}^{n} x_i \right) \cdot \left( \sum_{i=1}^{n} y_i \right)}{\Delta} \qquad (9)$$

$$b = \frac{\left( \sum_{i=1}^{n} x_i^2 \right) \cdot \left( \sum_{i=1}^{n} y_i \right) - \left( \sum_{i=1}^{n} x_i \right) \cdot \left( \sum_{i=1}^{n} x_i y_i \right)}{\Delta} \qquad (10)$$

$$y = ax + b \qquad (11)$$

-

Um einen kürzesten Weg aus einer vorhandenen Menge an Schnittpunkten zu errechnen, wird gemäß Ausführungsbeispielen der vorliegenden Erfindung ein so genannter Routing-Algorithmus verwendet. Hierbei kann beispielsweise ein Algorithmus basierend auf dem bekannten Dijkstra-Algorithmus eingesetzt werden, welcher als Eingangsgröße einen gewichteten Graphen verlangt. Dieser besteht aus einer Menge an Punkten (Knoten) und gewichteten Kanten, welche die Knoten verbinden. Bei Ausführungsbeispielen der vorliegenden Erfindung werden die ermittelten Schnittpunkte und die aktuellen Positionen der Endgeräte als Knoten betrachtet, die Trails zwischen den Schnittpunkten bzw. aktuellen Positionen der Endgeräte als Kanten. Da es unterschiedliche Verbindungen der Knoten über die verschiedenen Trails gibt, entspricht bei Ausführungsbeispielen der vorliegenden Erfindung das Gewicht der Kanten einer Anzahl an Messungen zwischen zwei Knoten. Sollten zwei Knoten nicht direkt miteinander verbunden sein, wird hierfür trotzdem eine Kante verwendet, welche allerdings das Gewicht Unendlich trägt. D.h. eine erfindungsgemäße Vorrichtung zum Lokalisieren einer Position umfasst gemäß Ausführungsbeispielen ferner eine Einrichtung zum Bestimmen eines Weges zu einer Position auf dem Referenzweg, wobei die Einrichtung zum Bestimmen des Weges ausgebildet ist, um den Weg basierend auf einem Ergebnis des Vergleichens mittels des Dijkstra-Algorithmus zu bestimmen.

Der Dijkstra-Algorithmus ermittelt in einem Graphen die kürzeste Verbindung von einem Startpunkt A zu einem Zielpunkt B. Er speichert für jeden Knoten K dessen Gesamtentfernung d(k) zum Startpunkt A sowie den Knoten p(K), von dem aus er besucht wurde. Damit kann nach der Termination des Algorithmus durch schrittweises Rückwärtsverfolgen der jeweiligen Vorgängerknoten p(k) von B aus der beste Pfad durch den Graphen abgelesen werden.

Ein von dem Dijkstra-Algorithmus ermittelter Leittrail wird gemäß Ausführungsbeispielen einem Leitalgorithmus übergeben, der beide Endgeräte zusammenführen soll. Bei der Erzeugung des Leittrails werden aus den Trails der beteiligten Endgeräte Teilstücke, entsprechend den Ergebnissen der Routenplanung des Dijkstra-Algorithmus, aneinander gehängt. Dabei ist darauf zu achten, dass die Teilstücke im benötigten Ablaufssinn eingefügt werden. Dazu zeigt Fig. 21 eine schematische Darstellung von Laufwegen von drei Endgeräten CL1, CL2 und CL3, wobei der Laufweg von CL1 den Laufweg von CL3 in einem Schnittpunkt SP1 schneidet, und der Laufweg von CL2 den Laufweg von CL3 in einem Schnittpunkt SP2 schneidet. Um CL1 und CL2 zusammenzuführen, wird der Leittrail für CL1 folgendermaßen zusammengesetzt. CL1 - SP1 (Trail 1 rückwärts) + SP1 - SP2 (Trail 3 vorwärts) + SP2 - CL2 (Trail 2 vorwärts). Entsprechend kann der Leittrail für CL2 aufgebaut werden. CL2 - SP2 (Trail 2 rückwärts) + SP2 - SP1 (Trail 3 rückwärts) + SP1 - CL1 (Trail 2 vorwärts).

Der Leitalgorithmus soll den beiden Endgeräten alle nötigen Informationen geben, um sich gegenseitig aufzufinden. Dies geschieht im Wesentlichen dadurch, dass ermittelt wird, ob sich der jeweilige Client auf dem gebildeten Leittrail befindet oder nicht. Der Leitalgorithmus dient also erfindungsgemäß zum Bestimmen einer Beziehung zwischen der momentanen Position eines Endgeräts und dem Referenzweg bzw. dem Leittrail. Gemäß Ausführungsbeispielen der vorliegenden Erfindung kann ein Leittrail bzw. der Referenzweg natürlich auch ein von einem Client vorher komplett selbst durchlaufener Weg sein. Ein solches Szenario ist beispielsweise dann denkbar wenn ein Benutzer nach Durchschreiten eines bestimmten Weges zu dem Anfangspunkt des Weges zurückfinden möchte.

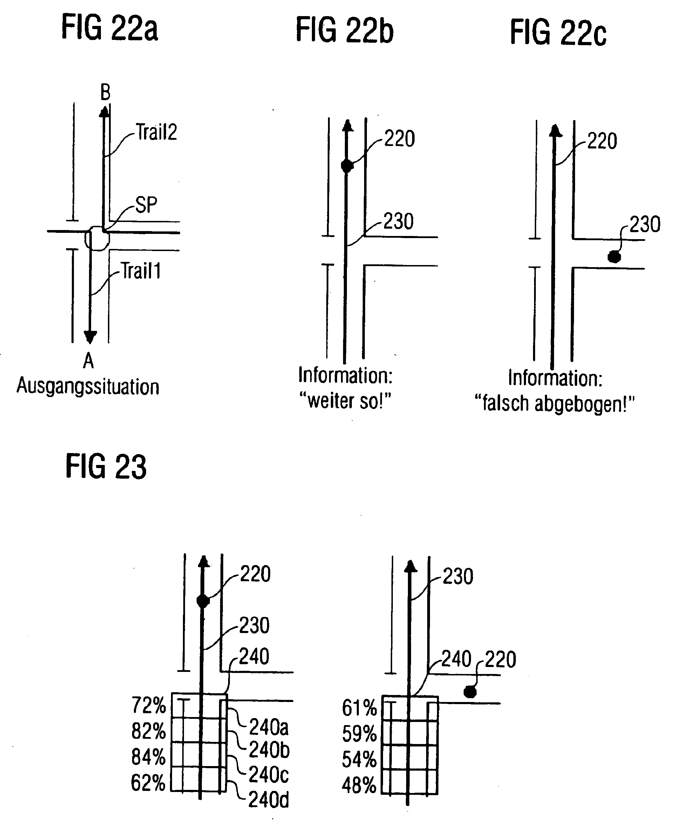

Fig. 22 gibt einen Überblick über verschiedene Stufen des Auffindens eines Kommunikationspartners. Fig. 22a zeigt eine Ausgangssituation, wobei ein Client A einen Weg 1 bzw. Trail 1 beschritten hat und wobei ein Client B einen Weg 2 bzw. Trail 2 beschritten hat, wobei sich Weg 1 und Weg 2 in dem Schnittpunkt SP schneiden bzw. berühren. Fig. 22b zeigt einen suchenden Client 220 auf seinem, als Pfeil 230 dargestellten Leittrail. Für das in Fig. 22b dargestellte Szenario liefert der Leitalgorithmus gemäß einem Ausführungsbeispiel der vorliegenden Erfindung prinzipiell eine Information an den Client 220, dass er sich auf dem richtigen Weg befindet, und weiter so gehen soll. Hingegen zeigt Fig. 22c ein Szenario, in dem der Client 220 falsch von seinem Leittrail 230 abgebogen ist. In diesem Falle soll der Leitalgorithmus dem Client 220 eine entsprechende Information zukommen lassen.

Einem Anwender wird durch den Leitalgorithmus übermittelt, wo seine ungefähre Position innerhalb eines bestimmten Teilstücks des Leittrails ist. Dabei weist das Teilstück gemäß einem Ausführungsbeispiel der vorliegenden Erfindung eine Läge von ca. 20 Metern auf. In einem vordefinierten Zeitintervall werden Wahrscheinlichkeiten errechnet, mit welchen sich der Client in verschiedenen Bereichen des Teilstücks befindet. Zur Veranschaulichung ist dieser Zusammenhang in Fig. 23 schematisch gezeigt.

Fig. 23 (links) zeigt einen Client 220, der sich auf einem Leittrail 230 befindet. Der Leittrail 230 weist ein Teilstück 240 auf, welches wiederum in vier Abschnitte 240a - 240d unterteilt ist. In dem in Fig. 23 (links) gezeigten Szenario befindet sich der Client auf einer Position in dem Abschnitt 240b des Teilstücks 240 des Leittrails 230.

Fig. 23 (rechts) zeigt ein Szenario in dem der Client 220 sich abseits des Leittrails 230 befindet. Demnach befindet sich der Client 220 nicht in dem Teilstück 240.

Bei dem erfindungsgemäßen Leitalgorithmus werden beispielsweise alle zwei Sekunden die Wahrscheinlichkeiten errechnet, mit welcher sich der Client 220 in jedem der vier in Fig. 23 dargestellten Bereiche 240a - 240d des Teilstücks 240 befindet. Hat ein Anwender den Eindruck, dass er sich am Ende des Teilstücks 240 befindet, kann beispielsweise manuell ein neues Teilstück vom Server angefordert werden. Läuft der Leitalgorithmus auf dem Server selbst, kann gemäß weitern Ausführungsbeispielen der vorliegenden Erfindung der Server natürlich auch automatisch ein neues Teilstück an den Anwender bzw. den Client senden. Entfernt sich der Anwender vom Leittrail oder vom aktuellen Teilstück 240, so wie es beispielhaft in Fig. 22B gezeigt ist, verändern sich die Werte der Wahrscheinlichkeiten, wie es in Fig. 22 dargestellt ist.

Im Folgenden werden die genauen Schritte zur Ermittlung dieser in Fig. 23 dargestellten Wahrscheinlichkeiten näher erläutert.

Die ermittelten Werte für die Wahrscheinlichkeiten sind wichtige Orientierungshilfen für einen Anwender, da hiermit die eigentliche Navigation stattfindet. Zur Berechnung der Wahrscheinlichkeiten weist, gemäß Ausführungsbeispielen der vorliegenden Erfindung, ein Client einen Ringspeicher auf. Dieser Ringspeicher kann beispielsweise die letzten 40 ermittelten Messpakete speichern. Umfasst das Teilstück 240 des Leittrails beispielsweise 100 Messpakete, so kann der Inhalt des Ringspeichers an vier bestimmten Stellen über dem Teilstück 240 des Leittrails 230 platziert werden. In erster Linie durch eine Errechnung eines Korrelationskoeffizienten der jeweiligen Signalmuster des Ringspeichers und der bestimmten Stelle über dem Teilstück 240 werden Wahrscheinlichkeiten $\zeta 1 - \zeta 4$ ermittelt. Der Korrelationskoeffizient gibt an, wie ähnlich sich die beiden Signale sind, wobei zu beachten ist, dass beide Signalmuster vorzugsweise die gleiche Länge haben sollten.

Entfernt sich ein Client 220 vom Leittrail 230, so verschlechtern sich die Werte für die Wahrscheinlichkeiten nur relativ langsam, da zwar beispielsweise alle zwei Sekunden eine Aktualisierung stattfindet, aber im Ringspeicher die Messpakete beispielsweise der letzten acht Sekunden gehalten werden. Die Länge dieser Abschnitte im Ringspeicher darf aber auch nicht zu klein werden, da sonst eine Auswertung mittels des Korrelationskoeffizienten keine brauchbaren Ergebnisse mehr liefert. Gemäß Ausführungsbeispielen der vorliegenden Erfindung wird der Korrelationskoeffizient $\rho'$ gemäß

$$\rho' = \frac{\sum(x[\vartheta] \cdot y[\vartheta])}{\sqrt{\sum x[\vartheta]^2 \cdot \sum y[\vartheta]^2}} \qquad (15)$$

berechnet.

Der Korrelationsfaktor oder Korrelationskoeffizient $\rho'$ ist eine dimensionslose Größe, für die stets $\rho'^2 \leq 1$ gilt, was mit der so genannten "Cauchy-Schwarzschen-Ungleichung" bewiesen werden kann. Werden die an einem Client gemessenen RSSI-Werte um den Betrag des kleinsten auftretenden RSSI-Wertes angehoben, also beispielsweise um 90 dB, liegen die zu erwartenden Werte für p' zwischen 0 und 1. Um Fehler bei der Berechnung der Korrelationskoeffizienten zu vermeiden, die auf zu geringe Signalenergien zurückzuführen sind, werden gemäß einem Ausführungsbeispiel der vorliegenden Erfindung nur die Signale der fünf stärksten Funksender ausgewertet. Aus den sich daraus ergebenden fünf Korrelationskoeffizienten wird ein Mittelwert gebildet, um so einen Wert für ρ' zu erhalten.

Gemäß weiteren Ausführungsbeispielen der vorliegenden Erfindung ist die Einrichtung zum Vergleichen der ermittelten Eigenschaften mit vorher aufgezeichneten Eigenschaften, die einen Referenzweg charakterisieren, und zum Bestimmen einer Beziehung zwischen der Position und dem Referenzweg aufgrund eines Ergebnisses des Vergleichens ausgebildet, um einen Abstand zwischen zwei Positionen zweier Clients auf einem Referenzweg zu ermitteln. Dabei kann die Ermittlung des Abstands auf zwei unterschiedliche Methoden erfolgen. Zum Einen kann ein Server aufgrund der zuletzt an beide Clients verschickten Teilstücke des Leittrails auf die Positionen der beiden Clients schließen. Diese Methode ist jedoch mit einer relativ hohen Ungenauigkeit behaftet.

Des Weiteren kann der Server die genauen Positionen und den daraus resultierenden Abstand der beiden Clients errechnen, wenn beide Clients mittels einer erfindungsgemäßen Einrichtung zum Ermitteln von Eigenschaften von Funksignalen jedes ermittelte Messpakete an den Server weiterleiten, wo sie beispielsweise in einen Ringspeicher vordefinierter Größe verwaltet werden, um Informationen über die jeweilige Position zu erhalten. Dieser Algorithmus funktioniert nach den Methoden der im Vorhergehenden bereits beschriebenen Schnittpunktsuche. Hierbei wird die Position eines Clients innerhalb eines beispielsweise 200 Messpakete langen Trails berechnet, welcher die beiden beispielsweise 100 Messpakete langen Teilstücke der Leittrails der beiden Clients umfasst.

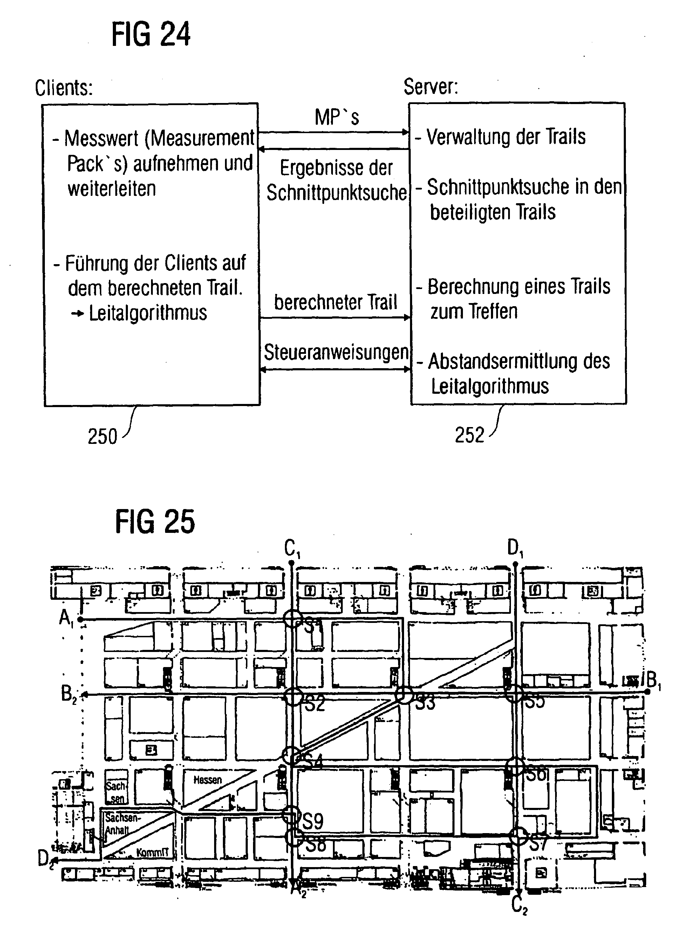

Zusammenfassend zeigt Fig. 24 noch einmal das Zusammenspiel zwischen einem Client und einem Server zur Durchführung des erfindungsgemäßen Konzepts.

Fig. 24 zeigt einen Client 250 und einen Server 252. Der Client 250 umfasst einen Einrichtung zum Messen von Eigenschaften von Funksignalen der fest positionierten Funksender an der Position des Clients und er umfasst ferner eine Einrichtung zum Übermitteln der gemessenen Eigenschaften zu dem Server 252. Damit können die von dem Client 250 aufgenommenen Messpakete einzeln an den Server geschickt werden. Dazu umfasst der Server 252 gemäß Ausführungsbeispielen der vorliegenden Erfindung eine Einrichtung zum Empfangen der gemessenen Eigenschaften. Der Server 252 ist ausgebildet, um die von den Clients 250 empfangenen Messpakete für jeden beteiligten Client getrennt voneinander in Form von so genannten Trails, zu verwalten. Um eine Schnittpunktsuche von zwei Trails durchführen zu können, umfasst der Server 252 gemäß Ausführungsbeispielen eine Einrichtung zum Vergleichen der ermittelten Eigenschaften eines ersten Trails mit vorher aufgezeichneten Eigenschaften eines zweiten Trails und zum Bestimmen einer Beziehung zwischen den einzelnen Positionen des ersten Trails und dem zweiten Trail aufgrund des Vergleichens. Die Beziehung ergibt sich in diesem Falle beispielsweise als ein Schnittpunkt, falls sich der erste Trail und der zweite Trail in wenigstens einem Punkt schneiden. Aufgrund der Positionen der Clients und der ermittelten Schnittpunkte zwischen den Trails, kann der Server einen Leittrail für jeden der beteiligten Clients ermitteln, um die Clients zusammenzuführen. Diese Leittrails dienen den beiden Clients jeweils als Referenzweg. Der Server ist also gemäß Ausführungsbeispielen ausgebildet, um den ermittelten Leittrail an die Clients zu übermitteln. Gemäß Ausführungsbeispielen sind die Clients ausgebildet, um den vom Server ermittelten Leittrail zu empfangen. Mit diesem Leittrail bzw. Referenzweg ist ein Client 250 nun in der Lage, die ermittelten Eigenschaften von Funksignalen des fest positionierten Senders an seiner momentanen Situation mit vorher aufgezeichneten Eigenschaften des Referenzweges bzw. Leittrails zu vergleichen und eine Beziehung zwischen der momentanen Position und dem Referenzweg aufgrund des Vergleichens zu bestimmen. Dies erfolgt durch den im Vorhergehenden bereits beschriebenen Leitalgorithmus durch Anzeige von Wahrscheinlichkeiten. Gemäß Ausführungsbeispielen der vorliegenden Erfindung kann der Server 252 die momentane Position bzw. die momentan gemessenen Eigenschaften der Funksignale eines Clients verwenden, um damit und dem Leittrail einen Abstand zu einem anderen Client zu ermitteln, der sich auf diesem Leittrail befindet.

So schafft die vorliegende Erfindung gemäß einem ersten Aspekt ein Konzept zum Nachverfolgen von Laufwegen. Um sich auf einen Laufweg zu lokalisieren, werden aktuelle Messwerte mit vorher aufgezeichneten Messwerten des Laufwegs verglichen und eine Übereinstimmung mittels der im Vorhergehenden erwähnten Schnittpunktsuche gesucht. Ist diese Übereinstimmung gefunden, kann ein Nutzer von da an geführt werden. Dies bedeutet, dass dem Nutzer beispielsweise "weiter" signalisiert wird, so lange die Übereinstimmung der aktuellen Messwerte und der vorher aufgezeichneten Messwerte des Laufwegs in zeitlich fortlaufender Form gegeben ist. Weichen die aktuellen Messwerte der fest installierten Funksender zu stark vom Laufweg ab oder die Übereinstimmung läuft im Lauftrail rückwärts, so wird einem Nutzer beispielsweise "bitte wenden" signalisiert. Diese Beziehung zwischen der Position und dem Referenzweg wird durch den im Vorhergehenden bereits beschriebenen Leitalgorithmus bewerkstelligt.

Da der aufgezeichnete Weg ohne Vorgaben an den Nutzer während dessen Bewegung aufgezeichnet wird, kann der Laufweg des Nutzers Phasen von Stillstand sowie Schleifen enthalten. Daher kann dem Nachverfolgen optional eine Aufbereitungsphase vorangehen. In dieser Phase wird der Trail in einem ersten Schritt auf Stillstandsphasen untersucht. Diese sind **dadurch gekennzeichnet, dass** sich die Messwerte über einen gewissen Zeitraum nur marginal ändern bzw. um Mittelwerte schwanken. Der Trail kann an dieser Stelle verkürzt werden, so dass die Stillstandsphase beim Nachverfolgen übersprungen wird. D.h. die Einrichtung zum Vergleichen ist gemäß Ausführungsformen ausgebildet, um die vorher aufgezeichneten Eigenschaften, die den Referenzweg charakterisieren, auf eine Schleife und/oder einen Stillstand innerhalb des Referenzweges zu untersuchen, und diese der Schleife und/oder dem Stillstand entsprechenden Eigenschaften gegebenenfalls zu entfernen.

In einem zweiten optionalen Schritt werden Schleifen eliminiert. Eine Schleife ist **dadurch gekennzeichnet, dass** Messwerte an einer Stelle des Trails enthalten sind, die an einer anderen Stelle nochmals auftauchen. Die Schleife kann dadurch entfernt werden, dass sämtliche Messwerte zwischen diesen beiden Punkten entfernt werden.

Eine Variante des Nachverfolgens eines Laufweges ist die Rückverfolgung eines eigenen Wegs (beispielsweise das Zurückfinden zu einem Auto, Zurückfinden zu einem Treffpunkt). Hierbei wird ein eigener Weg in umgekehrter zeitlicher Abfolge nachverfolgt.

Um Anderen Gelegenheit geben zu können, einen Laufweg nach zu vollziehen, kann gemäß Ausführungsbeispielen ein Weg von dem Gerät eines Nutzers an ein zweites Gerät übertragen werden. So kann der Nutzer des zweiten Geräts den Laufweg des ersten Nutzers nachverfolgen.

Gemäß einer weiteren Ausführungsform ermöglicht die vorliegende Erfindung das Auffinden von anderen Personen oder autonomen Systemen. Dazu tauschen Partner kontinuierlich ihre aufgenommenen Messdaten aus. Dies kann, gemäß einem Ausführungsbeispiel, über einen zentralen Server geschehen oder bidirektional bzw. Peer to Peer. Beide Geräte kennen dadurch den Laufweg des anderen Partners. Wollen sich die beiden Partner treffen, so untersucht jeder Partner bzw. der Server beide Trails auf Schnittpunkte, d. h. Stellen mit ähnlichen Messwerten im eigenen und Partner-Weg. Dies erfolgt beispielsweise von einem Ende des Weges rückwärts, um sicherzustellen, dass der zeitlich jüngste Schnittpunkt gefunden wird. Anschließend verfolgen beide Partner ihren eigenen Weg zurück. Kommt ein Partner zeitlich vor dem anderen Partner am errechneten Schnittpunkt an, so folgt er ab jetzt dem Weg des anderen Partners in Vorwärtsrichtung, bis beide Partner sich treffen.

Dabei kann die Verwaltung der Laufwege und die Schnittpunktsuche verteilt auf den Endgeräten erfolgen. Gemäß einem weiteren Ausführungsbeispiel erfolgt die Verwaltung der Laufwege und die Schnittpunktsuche zentral auf einem Server. Dies ist abhängig von den Gegebenheiten und von den Rechenkapazitäten der beteiligten Systeme.

Das erfindungsgemäße Konzept kann zu einem Mehrbenutzersystem oder einem Multi-Weg-System eines oder mehrerer Benutzer erweitert werden. In diesem Fall tauschen mehrere Benutzer ihre Messdaten kontinuierlich aus, oder senden sie an einen Server. Die einzelnen Trails werden auf Schnittpunkte untereinander untersucht. Dadurch entsteht ein vermaschter Graph, dessen Knoten die Schnittpunkte und dessen Kanten die Wegstücke zwischen den Schnittpunkten sind. Wird die im Vorhergehenden bereits beschriebenen Eliminierung von Schleifen und Stillstandsphasen eingesetzt, sowie eine annähernd gleiche Bewegungsgeschwindigkeit vorausgesetzt, so ist die Länge der Wegstücke ein Maß für die räumliche Distanz der Schnittpunkte. Will ein erster Nutzer an seinem ersten Standpunkt sich mit einem zweiten Nutzer an einem zweiten Standpunkt treffen, so wird für jeden Nutzer eine Route durch den Graphen berechnet, wobei die Route aus Wegstücken besteht, auf denen die Nutzer geleitet werden. Für die Berechnung der Route auf Graphen stehen bekannte Verfahren, wie das in der Literatur ausführlich beschriebene Verfahren von Dijkstra, zur Verfügung. Dadurch kann jederzeit auch eine Entfernung zu einem Ziel geschätzt werden. Durch dieses Konzept kann eine Datenbank aufgebaut werden, die beispielsweise weltweit zum Zusammenführen von Endgeräten ohne Kartenmaterial verwendet werden kann.

Das erfindungsgemäße Konzept kann derart erweitert werden, dass zu bestimmten Zeitpunkten semantische Informationen hinterlegt werden. Dies kann beispielsweise ein Name einer Sehenswürdigkeit sein, welche gerade passiert wird, oder beispielsweise eine Information, dass sich an der momentanen Position ein Geldautomat befindet, oder ein beliebiger Bezeichner für einen später wieder zu findenden Treffpunkt. Diese Informationen werden in einem Laufweg als Informationspunkte hinterlegt und bilden fortan eingeständige Punkte, so genannte "Points of Interrest" im vorher beschriebenen Routing-Graphen. Andere Benutzer des Systems können sich jetzt zu diesen Punkten leiten lassen.

Abschließend sollen noch drei Anwendungsmöglichkeiten für das erfindungsgemäße Konzept gegeben werden.

Ein Benutzer parkt beispielsweise sein Auto auf einem Parkplatz in einer fremden Stadt. Beim Verlassen des Fahrzeugs schaltet er sein mobiles Endgerät, welches ein Mobiltelefon bzw. ein PDA mit WLAN-Funktion sein kann, in einen Rückverfolgungsmodus. Anschließend besucht der Benutzer Sehenswürdigkeiten der Stadt. Am Ende seiner Tour will der Benutzer zu seinem Auto zurückfinden. Er schaltet sein Gerät in einen Führungsmodus und bekommt daraufhin Anweisungen wie beispielsweise "Weiterlaufen" oder "andere Richtung". Das Gerät führt ihn optimiert auf seinem eigenen Weg zurück, d. h. es eliminiert Schleifen und Aufenthaltszeiten. Für diese Anwendungsfall ist kein Datenaustausch mit einem Server oder einem anderen mobilen Gerät notwendig.

Bei einem zweiten Anwendungsbeispiel schaltet ein Benutzer sein mobiles Endgerät ein und verbindet sich über ein Zugangsnetzwerk mit einem Server. Auf dem Server ist beispielsweise bereits ein Routing-Graph hinterlegt, der Laufwege und Kreuzungspunkte früherer Nutzer enthält. Ein Nutzer hat einen Punkt mit der Bezeichnung "Lorenzkirche" hinterlegt. Der Benutzer wählt aus einer Anzeige der Sehenswürdigkeiten den Punkt "Lorenzkirche" und wird durch akustische oder visuelle Ausgabe geleitet.

Bei einem dritten Anwendungsbeispiel kommen selbstfahrende Roboter als Endgeräte zum Einsatz. Auf dem Server ist beispielsweise bereits ein Routing-Graph hinterlegt, der Laufwege und Kreuzungspunkte anderer Roboter bzw. früherer Fahrten enthält. Die Roboter verfügen über Umgebungssensorik, wie beispielsweise Kameras, über die sie Umgebungsmerkmale erkennen. Die Roboter verknüpfen zur Orientierung Umgebungsmerkmale mit Punkten im Routing-Graph. Die Roboter können auf diese Weise selbstständig Ihre Umgebung erkunden, Umgebungsmerkmale aufzeichnen und über den Routing-Graph in (räumliche) Beziehung zueinander setzen. Der Vorteil dieses Verfahrens zu einer lückenlosen Karte aus Umgebungsmerkmalen liegt im erheblich reduzierten Speicheraufwand und der schnellen Navigierbarkeit durch den Routing-Graphen. Ein Anwender kann anschließend einen Roboter zielgerichtet zu einem Umgebungsmerkmal schicken. Darüber hinaus kann aus dem Routing-Graph auf Entfernungen zwischen Umgebungsmerkmalen geschlossen werden. Auch ist es möglich, sich als Anwender selbst mit einem tragbaren Endgerät zu einem Umgebungsmerkmal führen zu lassen.

Weitere Anwendungsmöglichkeiten, beispielsweise im Bereich der Partnersuche, sind denkbar. Über Benutzer sind Benutzerprofile hinterlegt. Bei passenden Profilen werden zwei Partner informiert und können sich zu einem Treffpunkt führen lassen. Der Abstand der beiden Partner wird anhand der Länge des Trails geschätzt.

Das erfindungsgemäße Konzept eignet sich durch seinen Charakter insbesondere auch für Outdoor-Spiele mit hohem Interaktionsfaktor. Es besteht beispielsweise die Möglichkeit, sich gegenseitig zu suchen sowie Nachrichten bzw. Wegweiser an bestimmten Punkten zu hinterlassen.

Zusammenfassend wird noch einmal anhand von Fig. 25 ein Aspekt der vorliegenden Erfindung dargestellt.

Fig. 25 zeigt vier Trails durch einen Halle (A, B, C, D). Die Trails verlaufen von A1 nach A2, von B1 nach B2, von C1 nach C2 und von D1 nach D2 und bilden die Schnittpunkte S1 bis S9.

Will der Nutzer B an seinem Standpunkt B2 sich mit dem Nutzer C (momentaner Standpunkt C2) treffen, so wird für jeden Nutzer eine Route durch den Graphen berechnet, die aus Trailstücken besteht, auf denen die Nutzer geleitet werden. Für die Berechnung der Route auf Graphen stehen bekannte Verfahren wie das in der Literatur ausführlich beschriebene Verfahren von Dijkstra zur Verfügung. Dadurch kann jederzeit auch die Entfernung zum Ziel geschätzt werden.

Im Beispiel wird der Nutzer B über S2, S4, S6 und S7 geleitet, der Nutzer C in Gegenrichtung. Wo sie sich letztendlich treffen, hängt von der Laufgeschwindigkeit der Nutzer ab.

In dem in Fig. 25 dargestellten Beispiel sind die Trails in einer Karte eingezeichnet, Tatsächlich ist der vermaschte Graph jedoch zunächst ohne festen Ortsbezug!

Eine Grundeigenschaft dieser Lösung ist, dass das Verfahren ohne Ortsbezug auskommt. Es handelt sich quasi um eine Navigation ohne Lokalisierung.

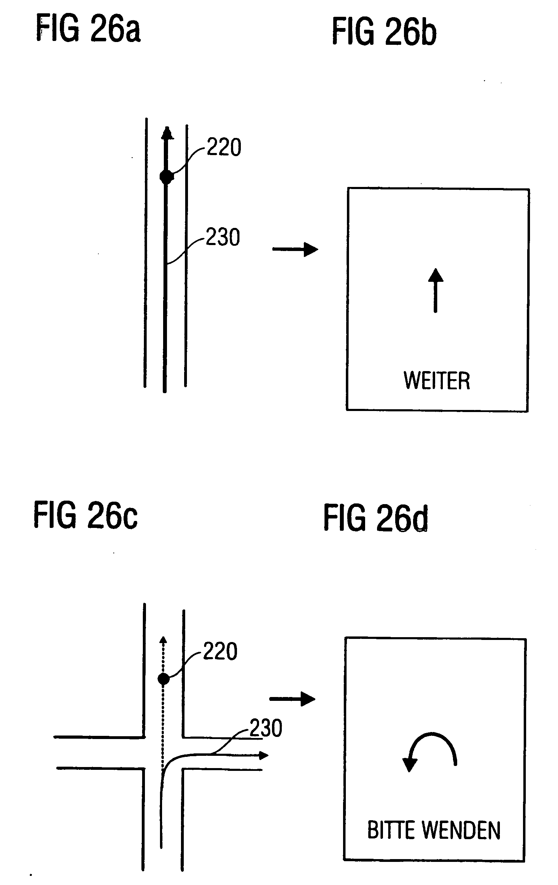

Dadurch sind weder Karten der Umgebung noch eine Datenerfassungsphase (Einlernen beim Fingerprinting, Datenbank mit Senderposition bei der Trilateration) nötig. Der Benutzer kann beispielsweise durch intuitive Kommandos (z.B. "weiter", "andere Richtung") oder durch eine Visualisierung (z.B. Farben, die angeben, wie gut der eigene Bewegung zum Trail passt) oder auch Audiosignale (z.B. ähnlich einem Metallsucher) geführt werden. Ein Beispiel für eine intuitive Führung ist in Fig. 26 gezeigt.

Fig. 26a zeigt einen Client 220 auf seinem, als Pfeil 230 dargestellten Leittrail. Für das in Fig. 26a dargestellte Szenario liefert der Leitalgorithmus gemäß einem Ausführungsbeispiel der vorliegenden Erfindung eine intuitive Information an den Client 220, dass er sich auf dem richtigen Weg befindet, und weiter so gehen soll, wie es beispielhaft in Fig. 26b gezeigt ist. Fig. 26b könnte beispielsweise eine Darstellung auf einem PDA- oder Mobiltelefondisplay sein.

Fig. 26c zeigt ein Szenario, in dem der Client 220 von seinem Leittrail 230 abgekommen ist. In diesem Falle soll der Leitalgorithmus dem Client 220 ebenfalls eine entsprechende, intuitive Information (z.B. "bitte wenden") zukommen lassen, die beispielhaft in Fig. 26d gezeigt ist. Fig. 26d könnte ebenso beispielsweise eine Darstellung auf einem PDA- oder Mobiltelefondisplay sein.

Das System ist in seiner Bedienung auch für wenig technikversierte Nutzer leicht verständlich ("Prinzip Topfklopfen") und stellt minimale Anforderungen an das mobile Endgerät. Damit ist das Verfahren neben PDAs und Mobiltelefonen auch für Kleinstplattformen ohne Display wie z.B. drahtlosen Funkknoten in Sensornetzen, iPods, etc. einsetzbar. Das System ist in jeder Umgebung mit drahtlosen Netzen ohne Vorarbeiten (insbesondere im öffentlichen Bereich, z.B. Innenstadt) verwendbar und vollkommen unabhängig von der Netzwerktechnologie. Ein Austausch der Trailinformationen kann über ein beliebiges Netzwerk erfolgen. Für Anwendungen, die keine Führung zu einem Partner beinhalten, z.B. Zurückfinden zum Auto, ist kein Netzwerkzugang und kein Server zum Datenaustausch notwendig.

Ein weiterer wichtiger Vorteil ist der Verzicht auf Umgebungskarten, welche oftmals nicht verfügbar sind und, insbesondere für den Innenbereich, aufwändig erstellt werden müssen. Bei einem Leitsystem basierend auf einem Lokalisierungssystem, wie es im Stand der Technik beschrieben ist, sind Umgebungskarten notwendig um gangbare Wege zu identifizieren. Andernfalls würden Routen berechnet, die in der Praxis nicht als Laufwege möglich sind. Das beschriebene Verfahren löst sich von dieser Notwendigkeit der Karten, da es nur Wege ins System aufnimmt, die von einem Benutzer schon erfolgreich durchschritten wurden. Insbesondere ist durch dieses System auch die Abschätzung von realen Laufdistanzen ohne Umgebungskarte möglich.

Das System kann leicht derart erweitert werden, dass zu bestimmten Zeitpunkten semantische Informationen hinterlegt werden. Dies kann z.B. der Name einer Sehenswürdigkeiten sein die gerade passiert wird, die Information dass sich hier ein Geldautomat befindet, oder ein beliebiger Bezeichner für einen später wiederzufindenden Treffpunkt. Diese Informationen werden im Trail als Informationspunkte hinterlegt und bildet fortan eigenständige Punkte im o.g. Routing-Graphen. Andere Nutzer können sich jetzt zu diesem Punkt leiten lassen.

Insbesondere wird darauf hingewiesen, dass abhängig von den Gegebenheiten das erfindungsgemäße Konzept auch in Software implementiert sein kann. Die Implementierung kann auf einem digitalen Speichermedium insbesondere einer Diskette oder einer CD mit elektronisch auslesbaren Steuersignalen erfolgen, die so mit einem programmierbaren Computersystem und/oder Mikrocontroller zusammenwirken können, dass das entsprechende Verfahren ausgeführt wird. Allgemein besteht die Erfindung somit auch in einem Computerprogrammprodukt mit einem auf einem maschinenlesbaren Träger gespeichertem Programmcode zur Durchführung des erfindungsgemäßen Verfahrens, wenn das Computerprogrammprodukt auf einem Rechner und/oder Mikrocontroller abläuft. In anderen Worten ausgedrückt kann die Erfindung somit als ein Computerprogramm mit einem Programmcode zur Durchführung des Verfahrens realisiert werden, wenn das Computerprogramm auf einem Computer und/oder Mikrocontroller abläuft.

## Patentansprüche

1. Vorrichtung zum Lokalisieren einer Position oder zum Navigieren auf einem Weg, wobei entlang des Weges Funksignale von fest positionierten Funksendern empfangbar sind, mit folgenden Merkmalen:

   einer Einrichtung zum Vergleichen elektromagnetischer Eigenschaften der Funksignale, die einen Messpunkt meist eindeutig identifizieren, um mehrere Referenzwege anhand von Gemeinsamkeiten der elektromagnetischen Eigenschaften auf einen Schnittpunkt, der eine gleiche geografische Position in unterschiedlichen Referenzwegen kennzeichnet, zu untersuchen und die Referenzwege zu einem Graph zu verbinden, wobei Schnittpunkte und aktuelle Positionen von Endgeräten als Knoten und ein Wegabschnitt zwischen den Schnittpunkten bzw. aktuellen Positionen der Endgeräte als Kanten des Graphen betrachtet werden, und wobei ein Referenzweg jeweils durch eine zeitliche Abfolge von vorher aufgezeichneten elektromagnetischen Eigenschaften der Funksignale von fest positionierten Funksendern charakterisiert ist;
   einer Einrichtung zum Bestimmen eines Leitweges von der Position zu dem Schnittpunkt, wobei die Einrichtung zum Bestimmen des Leitweges ausgebildet ist, um den Leitweg durch einen Routing-Algorithmus basierend auf dem Graphen zu bestimmen; und
   einer Einrichtung zum Ermitteln von Eigenschaften der Funksignale der fest positionierten Funksender an der Position auf dem Weg, wobei die ermittelten Eigenschaften der Funksignale elektromagnetische Eigenschaften der Funksignale umfassen,

   wobei die Einrichtung zum Vergleichen ausgebildet ist, die elektromagnetischen Eigenschaften der Funksignale mit vorher aufgezeichneten elektromagnetischen Eigenschaften der Funksignale, die den Leitweg charakterisieren zu vergleichen und eine Beziehung zwischen der Position und dem Leitweg aufgrund eines Ergebnisses des Vergleichens zu bestimmen.

2. Vorrichtung gemäß Anspruch 1, bei der die Einrichtung zum Ermitteln der Eigenschaften ausgebildet ist, um eine Empfangsfeldstärke, ein Empfangsleistungsspektrum und/oder ein Signal-zu-Rauschleistungsverhältnis der Funksignale an der Position zu ermitteln.

3. Vorrichtung gemäß einem der vorhergehenden Ansprüche, bei der die Einrichtung zum Ermitteln der Eigenschaften ausgebildet ist, um aus den ermittelten Eigenschaften eine einen fest positionierten Funksender i-dentifizierende Senderkennung zu ermitteln.

4. Vorrichtung gemäß einem der vorhergehenden Ansprüche, die ausgebildet ist, um Kenntnis über eine aktuelle Sendeleistung eines fest positionierten Funksenders zu erlangen.

5. Vorrichtung gemäß einem der vorhergehenden Ansprüche, bei der die Vorrichtung ferner eine Einrichtung zum Aufbereiten der ermittelten elektromagnetischen Eigenschaften der Funksignale aufweist.

6. Vorrichtung gemäß Anspruch 5, bei der die Einrichtung zum Aufbereiten ausgebildet ist, um einem Funksignal eines ortsfesten Funksenders eine vorbestimmte elektromagnetische Signaleigenschaft zuzuordnen, falls von dem Funksender keine elektromagnetische Signaleigenschaft ermittelbar ist, um jeweils eine gleiche Anzahl von ermittelten elektromagnetischen Eigenschaften pro Zeitintervall $\Delta T$ für eine Mehrzahl von Funksendern an der Position zu erhalten.

7. Vorrichtung gemäß Anspruch 5 oder 6, wobei die Einrichtung zum Aufbereiten ausgebildet ist, um bei $RSSI_k(i+1) < (RSSI_k(i) - \rho RSSI_k)$ $RSSI_k(i+1) = RSSI_k(i)$ zu setzen, wobei sich $RSSI_k(i+1) - RSSI_k(i)$ nur zweimal für jeweils zwei aufeinanderfolgende Messwerte wiederholen darf, und wobei $RSSI_k(i)$ ein Maß für eine an der Position beim i-ten Messwert ermittelte elektromagnetische Feldstärke eines Funksignals eines k-ten ortsfesten Funksenders ist.

8. Vorrichtung gemäß einem der Ansprüche 5 bis 7, wobei die Einrichtung zum Aufbereiten einen Tiefpassfilter aufweist, um einen mittleren Signalverlauf der elektromagnetischen Eigenschaften der Funksignale der ortsfesten Funksender ermitteln zu können.

9. Vorrichtung gemäß Anspruch 8, wobei die Einrichtung zum Aufbereiten ferner eine Einrichtung zum Interpolieren des mittleren Signalverlaufs (70) aufweist, wobei die Einrichtung zum Interpolieren ausgebildet ist, um den mittleren Signalverlauf (70) zu interpolieren, wenn ein Maximum (maxAbl) zwischen einem zweiten (ndg2) und dritten Nulldurchgang (ndg3) der Ableitung (74) des Signalverlaufs (70) größer als ein Wert $X_1$ und ein Minimum (minAbl) zwischen einem ersten (ndg1) und dem zweiten Nulldurchgang (ndg2) der Ableitung (74) des Signalverlaufs kleiner als ein Wert $X_2$ oder das Maximum (maxAbl) zwischen dem zweiten (ndg2) und dritten Nulldurchgang (ndg3) der Ableitung (74) des Signalverlaufs größer als ein Wert $X_3$ und das Minimum (minAbl) zwischen dem ersten (ndg1) und zweiten Nulldurchgang (ndg2) der Ableitung (74) des Signalverlaufs kleiner als ein Wert $X_4$ ist.

10. Vorrichtung gemäß einem der vorhergehenden Ansprüche, wobei die Einrichtung zum Vergleichen ausgebildet ist, um einem der Position auf dem Weg entsprechenden gesuchten Messpaket (gesMP) von Feldstärken diejenigen N ortsfesten Funksender zuzuordnen, welche an der Position die N stärksten Feldstärken aufweisen und entsprechend der Feldstärken zu ordnen und dann das gesuchte Messpaket (gesMP) mit einem entsprechend vorher bestimmten Messpaket (MP*) des Referenzwegs zu vergleichen.

11. Vorrichtung gemäß Anspruch 10, bei der die Einrichtung zum Vergleichen, mittels einer ersten Vergleichsstufe (90) eine Ähnlichkeit zwischen dem gesuchten Messpaket (gesMP) und dem Referenzmesspaket (MP*) genau dann feststellt, wenn mindestens N-1 Funksender des gesuchten Messpakets (gesMP) in dem Referenzmesspaket (MP*) enthalten sind und der stärkste Funksender aus dem gesuchten Messpaket (gesMP) unter den stärksten beiden Funksendern des Referenzmesspakets (MP*) ist und der N. stärkste Funksender des gesuchten Messpakets (gesMP) nicht unter den stärksten beiden Funksendern aus dem Referenzmesspaket (MP*) ist und der zweitstärkste Funksender aus dem gesuchten Messpaket (gesMP) unter dem stärksten N-1 Funksendern aus dem Referenzmesspaket (MP*) ist, wobei bei einer Ähnlichkeit das entsprechende Referenzmesspaket in eine Ergebnismenge (EM1) der ersten Vergleichsstufe eingeht.

12. Vorrichtung gemäß Anspruch 11, bei der die Einrichtung zum Vergleichen ferner eine zweite Vergleichsstufe (98) aufweist, die ausgebildet ist, um mit der Ergebnismenge (EM1) der ersten Vergleichsstufe (90) eine Standardabweichung ($\sigma$) zwischen den Ergebnissen der Ergebnismenge (EM1) und des gesuchten Messpakets (gesMP) gemäß

$$\sigma = \sqrt{\frac{1}{N-1}\sum_{x=1}^{N}(d_x - d_m)^2}$$

zu ermitteln, wobei $d_x$ einen Betrag der Differenz zwischen RSSI-Werten zweier identischer ortsfester Funksender aus dem gesuchten Messpaket (gesMP) und einem Referenzmesspaket (MP*) aus der Ergebnismenge (EM1) der ersten Vergleichstufe bedeutet und $d_m$ einen Mittelwert der Differenzen $d_x$ bedeutet.

13. Vorrichtung gemäß einem der vorhergehenden Ansprüche, bei der die Einrichtung zum Vergleichen ausgebildet ist, um die vorher aufgezeichneten elektromagnetischen Eigenschaften, die den Referenzweg charakterisieren, auf eine Schleife und/oder einen Stillstand innerhalb des Referenzweges zu untersuchen, und diese der Schleife und/oder dem Stillstand entsprechenden elektromagnetischen Eigenschaften gegebenenfalls zu entfernen.

14. Verfahren zum Lokalisieren einer Position oder zum Navigieren auf einem Weg, wobei entlang des Weges Funksignale von fest positionierten Funksendern empfangbar sind, mit folgenden Schritten:

Vergleichen elektromagnetischer Eigenschaften der Funksignale, die einen Messpunkt meist eindeutig identifizieren, von mehreren Referenzwegen, um anhand von Gemeinsamkeiten der elektromagnetischen Eigenschaften einen Schnittpunkt zu suchen, der eine gleiche geografische Position in unterschiedlichen Referenzwegen kennzeichnet, wobei ein Referenzweg jeweils durch eine zeitliche Abfolge von vorher aufgezeichneten elektromagnetischen Eigenschaften der Funksignale von fest positionierten Funksendern charakterisiert ist; Verbinden der Referenzwege zu einem Graph, wobei Schnittpunkte und aktuelle Positionen von Endgeräten als Knoten und ein Wegabschnitt zwischen den Schnittpunkten bzw. aktuellen Positionen der Endgeräte als Kanten des Graphen betrachtet werden; Bestimmen eines Leitweges von der Position zu dem Schnittpunkt durch einen Routing-Algorithmus basierend auf dem Graphen; und Empfangen der Funksignale der fest positionierten Funksender an der Position auf dem Weg; Ermitteln von Eigenschaften der Funksignale der fest positionierten Funksender an der Position auf dem Leitweg, wobei die ermittelten Eigenschaften der Funksignale elektromagnetische Eigenschaften der Funksignale umfassen; und Vergleichen der ermittelten elektromagnetischen Eigenschaften mit vorher aufgezeichneten elektromagnetischen Eigenschaften, die den Leitweg charakterisieren; und Bestimmen einer Beziehung zwischen der Position und dem Leitweg aufgrund eines Ergebnisses des Vergleichens.

15. Computer-Programm mit einem Programmcode zur Durchführung des Verfahrens zum Lokalisieren einer Position gemäß Anspruch 14, wenn das Computer-Programm auf einem Computer abläuft.

**Claims**

1. An apparatus for localizing a position or for navigating on a path, radio signals of fixedly positioned radio transmitters being receivable along the path, the apparatus comprising:

a means for comparing electromagnetic properties of the radio signals mostly uniquely identifying a measurement point so as to examine several reference paths based on common characteristics of the electromagnetic properties for an intersection point characterizing an identical geographic position in different reference paths, and to interconnect the reference paths to form a graph, intersection points and current positions of terminal devices being regarded as a node, and a portion of a path between the intersection points or current positions of the terminal devices, respectively, being regarded as edges of the graph, and a reference path being **characterized by** a temporal succession of previously recorded electromagnetic properties of the radio signals of fixedly positioned radio transmitters; a means for determining a guidance path from the position to the intersection point, the means for determining the guidance path being configured to determine the guidance path by means of a routing algorithm on the basis of the graph; and a means for determining properties of the radio signals of the fixedly positioned radio transmitters at the position on the path, the determined properties of the radio signals comprising electromagnetic properties of the radio signals, the means for comparing being configured to compare the electromagnetic properties of the radio signals with previously recorded electromagnetic properties of the radio signals which characterize the guidance path, and to determine a relation between the position and the guidance path on the basis of a result of the comparison.

2. The apparatus as claimed in claim 1, wherein the means for determining the properties is configured to determine a received field strength, a received power spectrum, and/or a signal/noise power ratio of the radio signals at the position.

3. The apparatus as claimed in any of the previous claims, wherein the means for determining the properties is configured to determine, from the properties determined, a transmitter identification identifying a fixedly positioned radio transmitter.

4. The apparatus as claimed in any of the previous claims, configured to learn about the current transmitting power of a fixedly positioned radio transmitter.

**5.** The apparatus as claimed in any of the previous claims, wherein the apparatus further comprises a means for processing the determined electromagnetic properties of the radio signals.

**6.** The apparatus as claimed in claim 5, wherein the means for processing is configured to associate a predetermined electromagnetic signal property with a radio signal of a stationary radio transmitter if no electromagnetic signal property of the radio transmitter may be determined, so as to obtain an identical number of determined electromagnetic properties per time interval $\Delta T$ for a plurality of radio transmitters at the position, respectively.

**7.** The apparatus as claimed in claims 5 or 6, wherein the means for processing is configured to set $RSSI_k(i+1) = RSSI_k(i)$ if $RSSI_k(i+1) < (RSSI_k(i) - \Delta RSSI_k)$, wherein $RSSI_k(i+1) = RSSI_k(i)$ may only repeat itself twice for two successive measurement values in each case, and wherein $RSSI_k(i)$ is a measure of an electromagnetic field strength, determined at the position at the $i^{th}$ measurement value, of a radio signal of a $k^{th}$ stationary radio transmitter.

**8.** The apparatus as claimed in any of claims 5 to 7, wherein the means for processing comprises a low-pass filter to be able to determine an average waveform of the electromagnetic properties of the radio signals of the stationary radio transmitters.

**9.** The apparatus as claimed in claim 8, wherein the means for processing further comprises a means for interpolating the average waveform (70), the means for interpolating being configured to interpolate the average waveform (70) when a maximum (maxDer) between second (zc2) and third (zc3) zero crossings of the derivation (74) of the waveform (70) is larger than a value $X_1$, and when a minimum (minDer) between a first (zc1) and the second (zc2) zero crossings of the derivation (74) of the waveform is smaller than a value $X_2$, or when the maximum (maxDer) between the second (zc2) and third (zc3) zero crossings of the derivation (74) of the waveform is larger than a value $X_3$, and when the minimum (minDer) between the first (zc1) and second (zc2) zero crossings of the derivation (74) of the waveform is smaller than a value $X_4$.

**10.** The apparatus as claimed in any of the previous claims, wherein the means for comparing is configured to associate, with a sought-for measurement package (soughtMP) of field strengths which corresponds to the position on the path, those N stationary radio transmitters which at the position comprise the highest N field strengths, and to place them into an order in accordance with the field strengths, and to then compare the sought-for measurement package (soughtMP) with a measurement package (MP*), which was previously determined accordingly, of the reference path.

**11.** The apparatus as claimed in claim 10, wherein the means for comparing identifies, by means of a first comparison stage (90), a similarity between the sought-for measurement package (soughtMP) and the reference measurement package (MP*) precisely when at least N-1 radio transmitters of the sought-for measurement package (soughtMP) are contained within the reference measurement package (MP*), and when the strongest radio transmitter from the sought-for measurement package (soughtMP) is among the two strongest radio transmitters of the reference measurement package (MP*), and when the $N^{th}$ strongest radio transmitter of the sought-for measurement package (soughtMP) is not among the two strongest radio transmitters from the reference measurement package (MP*), and when the second strongest radio transmitter from the sought-for measurement package (soughtMP) is among the N-1 strongest radio transmitters from the reference measurement package (MP*), wherein with a similarity found the respective reference measurement package is taken into account in a result quantity (RQ1) of the first comparison stage.

**12.** The apparatus as claimed in claim 11, wherein the means for comparing further comprises a second comparison stage (98) configured to determine, with the result quantity (RQ1) of the first comparison stage (90), a standard deviation ($\sigma$) between the results of the result quantity (RQ1) and the sought-for measurement package (soughtMP) in accordance with

$$\sigma = \sqrt{\frac{1}{N-1}\sum_{x=1}^{N}\left(d_x - d_m\right)^2}\,,$$

wherein $d_x$ signifies a magnitude of the difference between RSSI values of two identical stationary radio transmitters from the sought-for measurement package (soughtMP) and a reference measurement package (MP*) from the result quantity (RQ1) of the first comparison stage, and $d_m$ signifies an average value of the differences $d_x$.

**13.** The apparatus as claimed in any of the previous claims, wherein the means for comparing is configured to check the previously recorded electromagnetic properties charactering the reference path for a loop and/or a standstill within the reference path, and to remove these electromagnetic properties which correspond to the loop and/or the standstill, if need be.

**14.** A method of localizing a position or for navigating on a path, radio signals of fixedly positioned radio transmitters being receivable along the path, the method comprising:

comparing electromagnetic properties of the radio signals mostly uniquely identifying a measurement point of several reference paths so as to search for an intersection point based on common characteristics of the electromagnetic properties characterizing an identical geographic position in different reference paths, a reference path being **characterized by** a temporal succession of previously recorded electromagnetic properties of the radio signals of fixedly positioned radio transmitters;

interconnecting the reference paths to form a graph, intersection points and current positions of terminal devices being regarded as a node, and a portion of a path between the intersection points or current positions of the terminal devices, respectively, being regarded as edges of the graph;

determining a guidance path from the position to the intersection point by means of a routing algorithm on the basis of the graph; and

receiving the radio signals of the fixedly positioned radio transmitters at the position on the path;

determining properties of the radio signals of the fixedly positioned radio transmitters at the position on the guidance path, the determined properties of the radio signals comprising electromagnetic properties of the radio signals; and

comparing the determined electromagnetic properties with previously recorded electromagnetic properties which characterize the guidance path; and

determining a relation between the position and the guidance path on the basis of a result of the comparison.

**15.** A computer program having a program code for performing the method of localizing a position as claimed in claim 14, when the computer program runs on a computer.

**Revendications**

**1.** Dispositif pour localiser une position ou pour naviguer sur un parcours, le long du parcours pouvant être reçus des signaux radioélectriques d'émetteurs radio positionnés de manière fixe, aux caractéristiques suivantes:

un moyen destiné à comparer les propriétés électromagnétiques des signaux radioélectriques identifiant le plus souvent de manière univoque un point de mesure, pour examiner plusieurs parcours de référence à l'aide de points communs des propriétés électromagnétiques à un point d'interconnexion caractérisant une même position géographique dans différents parcours de référence et pour réunir les parcours de référence en un graphique, les points d'interconnexion et les positions actuelles de terminaux étant considérés comme étant des noeuds et un segment de parcours entre les points d'interconnexion ou les positions actuelles des terminaux étant considéré comme étant un bord du graphique, et un parcours de référence étant chaque fois **caractérisé par** une succession dans le temps de propriétés électromagnétiques enregistrées auparavant des signaux radioélectriques d'émetteurs radio positionnés de manière fixe;

un moyen destiné à déterminer une route de la position au point d'interconnexion, le moyen destiné à déterminer la route étant réalisé de manière à déterminer la route par un algorithme de routage sur base du graphique; et un moyen destiné à déterminer des propriétés des signaux radioélectriques des émetteurs radio positionnés de manière fixe à la position sur le parcours, les propriétés déterminées des signaux radioélectriques comprenant des propriétés électromagnétiques des signaux radioélectriques,

le moyen destiné à comparer étant réalisé de manière à comparer les propriétés électromagnétiques des signaux radioélectriques avec des propriétés électromagnétiques enregistrées auparavant des signaux radioélectriques caractérisant la route et à déterminer un rapport entre la position et la route sur base d'un résultat de la comparaison.

**2.** Dispositif selon la revendication 1, dans lequel le moyen destiné à déterminer les propriétés est réalisé de manière à déterminer une intensité de champ de réception, un spectre de puissance de réception et/ou un rapport signal-bruit des signaux radioélectriques à la position.

3. Dispositif selon l'une des revendications précédentes, dans lequel le moyen destiné à déterminer les propriétés est réalisé de manière à déterminer, à partir des propriétés déterminées, une identification d'émetteur identifiant un émetteur radio positionné de manière fixe.

4. Dispositif selon l'une des revendications précédentes, réalisé de manière à obtenir une connaissance d'une puissance d'émission actuelle d'un émetteur radio positionné de manière fixe.

5. Dispositif selon l'une des revendications précédentes, dans lequel le dispositif présente par ailleurs un moyen destiné à préparer les propriétés électromagnétiques déterminées des signaux radioélectriques.

6. Dispositif selon la revendication 5, dans lequel le moyen destiné à préparer est réalisé de manière à associer à un signal radioélectrique d'un émetteur radio positionné de manière fixe une propriété de signal électromagnétique prédéterminée s'il ne peut pas être déterminé de propriété de signal électromagnétique de l'émetteur radio, pour obtenir chaque fois un même nombre de propriétés électromagnétiques déterminées par intervalle de temps ΔT pour une pluralité d'émetteurs radio à la position.

7. Dispositif selon la revendication 5 ou 6, dans lequel le moyen destiné à préparer est réalisé de manière à régler, en cas de $RSSI_k(i+1) < (RSSI_k(i) - \Delta RSSI_k)$, $RSSI_k(i+1) = RSSI_k(i)$, $RSSI_k(i+1) = RSSI_k(i)$ ne pouvant se répéter que deux fois pour chaque fois deux valeurs de mesure successives, et $RSSI_k(i)$ étant une mesure d'une intensité de champ électromagnétique d'un k-ième émetteur radio positionné de manière fixe déterminée à la position à la i-ième valeur de mesure.

8. Dispositif selon l'une des revendications 5 à 7, dans lequel le moyen destiné à préparer présente un filtre passe-bas pour pouvoir déterminer une évolution de signal moyenne des propriétés électromagnétiques des signaux électromagnétiques des émetteurs radio positionnés de manière fixe déterminée.

9. Dispositif selon la revendication 8, dans lequel le moyen destiné à préparer présente par ailleurs un moyen destiné à interpoler l'évolution de signal moyenne (70), le moyen destiné à interpoler étant réalisé de manière à interpoler l'évolution de signal moyenne (70) lorsqu'un maximum (maxAbl) entre un deuxième (ndg2) et un troisième passage par zéro (ndg3) de la dérivation (74) de l'évolution de signal (70) est supérieur à une valeur $X_1$ et un minimum (minAbl) entre un premier (ndg1) et le deuxième passage par zéro (ndg2) de la dérivation (74) de l'évolution de signal est inférieur à une valeur $X_2$ ou le maximum (maxAbl) entre le deuxième (ndg2) et le troisième passage par zéro (ndg3) de la dérivation (74) de l'évolution de signal est supérieur à une valeur $X_3$ et le minimum (minAbl) entre le premier (ndg1) et le deuxième passage par zéro (ndg2) de la dérivation (74) de l'évolution de signal est inférieur à une valeur $X_4$.

10. Dispositif selon l'une des revendications précédentes, dans lequel le moyen destiné à comparer est réalisé de manière à associer à un paquet de mesure recherché (gesMP) d'intensités de champ correspondant à la position sur le parcours les N émetteurs radio stationnaires qui présentent, à la position, les N intensités de champ les plus grandes et à les ordonner selon les intensités de champ et à comparer alors le paquet de mesure recherché (gesMP) avec un paquet de mesure déterminé auparavant en conséquence (MP*) du parcours de référence.

11. Dispositif selon la revendication 10, dans lequel le moyen destiné à comparer constate exactement, au moyen d'un premier étage de comparaison (90), une similitude entre le paquet de mesure recherché (gesMP) et le paquet de mesure de référence (MP*) lorsqu'au moins N-1 émetteurs radio du paquet de mesure recherché (gesMP) sont contenus dans le paquet de mesure de référence (MP*) et que l'émetteur radio le plus puissant du paquet de mesure recherché (gesMP) se trouve parmi les deux émetteurs radio les plus puissants du paquet de mesure de référence (MP*) et que le N-ième émetteur radio le plus puissant du paquet de mesure recherché (gesMP) ne se trouve pas parmi les deux émetteurs radio les plus puissants du paquet de mesure de référence (MP*) et que le deuxième émetteur radio le plus puissant du paquet de mesure recherché (gesMP) se trouve parmi les N-1 émetteurs radio les plus puissants du paquet de mesure de référence (MP*), le paquet de mesure de référence correspondant entrant, en cas de similitude, dans une quantité de résultat (EM1) du premier étage de comparaison.

12. Dispositif selon la revendication 11, dans lequel le dispositif destiné à comparer présentant, par ailleurs, un deuxième étage de comparaison (98) qui est réalisé de manière à déterminer par la quantité de résultat (EM1) du premier étage de comparaison (90) un écart standard (σ) entre les résultats de la quantité de résultats (EM1) et du paquet de mesure recherché (gesMP) selon

$$\sigma = \sqrt{\frac{1}{N-1}\sum_{x=1}^{N}\left(d_x - d_m\right)^2} \; ,$$

$d_x$ signifiant une quantité de la différence entre les valeurs RSSI de deux émetteurs radio stationnaires identiques du paquet de mesure recherché (gesMP) et un paquet de mesure de référence (MP*) de la quantité de résultat (EM1) du premier étage de comparaison et $d_m$ signifiant une valeur moyenne des différences $d_x$.

13. Dispositif selon l'une des revendications précédentes, dans lequel le moyen destiné à comparer est réalisé de manière à examiner les propriétés électromagnétiques enregistrées auparavant qui caractérisent le parcours de référence quant à une boucle et/ou un arrêt dans le parcours de référence et à éventuellement éliminer ces propriétés électromagnétiques correspondant à la boucle et/ou à l'arrêt.

14. Procédé pour localiser une position ou pour naviguer sur un parcours, le long du parcours pouvant être reçus des signaux radioélectriques d'émetteurs radio positionnés de manière fixe, aux étapes suivantes consistant à:

comparer les propriétés électromagnétiques des signaux radioélectriques, identifiant le plus souvent de manière univoque un point de mesure, de plusieurs parcours de référence, pour chercher, à l'aide de points communs des propriétés électromagnétiques, un point d'interconnexion caractérisant une même position géographique dans différents parcours de référence un parcours de référence étant chaque fois **caractérisé par** une succession dans le temps de propriétés électromagnétiques enregistrées auparavant des signaux radioélectriques d'émetteurs radio positionnés de manière fixe;

réunir les parcours de référence en un graphique, les points d'interconnexion et les positions actuelles de terminaux étant considérés comme étant des noeuds et un segment de parcours entre les points d'interconnexion ou les positions actuelles des terminaux étant considéré comme étant un bord du graphique;

déterminer une route de la position au point d'interconnexion par un algorithme de routage sur base du graphique; et

recevoir les signaux radioélectriques des émetteurs radio positionnés de manière fixe à la position sur le parcours;

déterminer des propriétés des signaux radioélectriques des émetteurs radio positionnés de manière fixe à la position sur la route, les propriétés déterminées des signaux radioélectriques comprenant des propriétés électromagnétiques des signaux radioélectriques; et

comparer les propriétés électromagnétiques déterminées avec des propriétés électromagnétiques enregistrées auparavant caractérisant la route; et

déterminer un rapport entre la position et la route sur base d'un résultat de la comparaison.

15. Programme d'ordinateur avec un code de programme pour réaliser le procédé pour localiser une position selon la revendication 14 lorsque le programme d'ordinateur est exécuté sur un ordinateur.

# FIG 1

| | | |
|---|---|---|
| S1 | ERMITTELN VON EIGENSCHAFTEN VON FUNKSIGNALEN | TEILNEHMER-GERÄT |
| S2 | ÜBERMITTELN DER GEMESSENEN EIGENSCHAFTEN | TEILNEHMER-GERÄT |
| S3 | EMPFANGEN DER GEMESSENEN EIGENSCHAFTEN | SERVER (OPT.) |
| S4 | VERGLEICHEN DER ERMITTELTEN EIGENSCHAFTEN MIT VORHER AUF-GEZEICHNETEN EIGENSCHAFTEN | TEILNEHMERGERÄT/ SERVER |
| S5 | BESTIMMEN EINER LOKALISATIONSINFORMATION | TEILNEHMERGERÄT/ SERVER |
| S6 | ÜBERTRAGEN DER LOKALISATIONS-INFORMATION AN DAS TEILNEHMERGERÄT | SERVER (OPT.) |

# FIG 2

| MP1 | MP2 | MP3 |
| --- | --- | --- |
| MAC    RSSI | MAC    RSSI | MAC    RSSI |

22

20    24

# FIG 3

B    34    32

SP

30    A

## FIG 4

"große Lücke"
42

AP: 22

"negativer Sprung"
40

RSSI-Wert [dBm]

Messungsnummer

## FIG 5

54          AP: 22          52

RSSI-Wert [dBm]

Messungsnummer

## FIG 6

## FIG 7

FIG 8

# FIG 9

# FIG 10a

# FIG 10b

# FIG 10c

# FIG 11a

5´er Block    4´er Block    3´er Block    2´er Block

116a
116b
116c
116d

112a
112b
114a
114b
114c

110

| 1 |
| 2 |
| 3 |
| 4 |
| 5 |

# FIG 11b

gesMP    MP*

| gesMP | MP* |
| --- | --- |
| AP4 | AP2 |
| AP6 | AP4 |
| AP15 | AP7 |
| AP10 | AP10 |
| AP9 | AP9 |

# FIG 11c

Beispiel 1:            Beispiel 2:

gesMP    MP*         gesMP    MP*

AP4 ←×→ AP4        AP4 ←×→ AP4

↕10dB   ↕3dB        ↕18dB   ↕9dB

| AP6 | AP6 |
| AP15 | AP15 |
| AP10 | AP10 |
| AP9 | AP9 |

| AP6 | AP6 |
| AP15 | AP15 |
| AP10 | AP10 |
| AP9 | AP9 |

## FIG 12

höherwertige Ergebnisse

| em2>A | A<=em3b<B | em3b>=B | |
|---|---|---|---|
| EM←EM2 | EM+←EM3b | ja em1b3b>=C nein | |
| | | EM+←EM1b3b | EM+←EM3b |

## FIG 13

minderwertige Ergebnisse

| ja em1b3>D(D) nein | | | | |
|---|---|---|---|---|
| EM-←EM1b3 | ja em1b3>E & em3>F nein | | | |
| | EM-←EM3 | ja em1b>=G nein | | |
| | | ja nein | | EM-←EM1 |
| | | EM-←EM1b | EM-←EM1 | |

## FIG 14

single SP:

Trail 1

Trail 2

## FIG 15

## FIG 16

a)

b)

c)

d)

## FIG 17

## FIG 18

on Trail:

Trail 1

Trail 2

# FIG 19

## FIG 20

## FIG 21

# FIG 22a

B

Trail2

SP

Trail1

A

Ausgangssituation

# FIG 22b

220

230

Information:
"weiter so!"

# FIG 22c

220

230

Information:
"falsch abgebogen!"

# FIG 23

220

230

240

72%
82%
84%
62%

240a
240b
240c
240d

230

240  220

61%
59%
54%
48%

## FIG 24

Clients:

- Messwert (Measurement Pack`s) aufnehmen und weiterleiten

- Führung der Clients auf dem berechneten Trail.
  → Leitalgorithmus

250

MP`s

Ergebnisse der Schnittpunktsuche

berechneter Trail

Steueranweisungen

Server:

- Verwaltung der Trails

- Schnittpunktsuche in den beteiligten Trails

- Berechnung eines Trails zum Treffen

- Abstandsermittlung des Leitalgorithmus

252

## FIG 25

# FIG 26a

# FIG 26b

WEITER

# FIG 26c

# FIG 26d

BITTE WENDEN

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050113111 A1
- EP 1109031 A1

**In der Beschreibung aufgeführte Nicht-Patentliteratur**

- **Kay Connelly et al.** A Toolkit for Automatically Constructing Outdoor Radio Maps. *Information Technology: Coding and Computing,* 2005